# EUROPEAN PATENT APPLICATION

(11) **EP 4 513 948 A1**
(43) Date of publication of application: **26.02.2025**
(21) Application number: 23795348.4
(22) Date of filing: 24.04.2023
(51) Int. Cl.: H04W 24/08, H04L 5/00

(54) **NEIGHBOR CELL MEASUREMENT METHOD AND COMMUNICATION APPARATUS**

(30) Priority: 25.04.2022 CN 202210444287
(71) Applicant: Huawei Technologies Co., Ltd., Shenzhen, Guangdong 518129 (CN)
(72) Inventor: SHEN, Zhongyi, Shenzhen, Guangdong 518129 (CN); ZHANG, Li, Shenzhen, Guangdong 518129 (CN); HAN, Jing, Shenzhen, Guangdong 518129 (CN); ZHANG, Jiayin, Shenzhen, Guangdong 518129 (CN)
(74) Representative: Roth, Sebastian
(86) International application number: PCT/CN2023/090349
(87) International publication number: WO 2023/207915

(57) **Abstract**

This application provides a neighbor cell measurement method and a communication apparatus, to improve accuracy of neighbor cell measurement. The method includes: determining N1 to-be-measured neighbor cells of a terminal device, where N1 is a positive integer; obtaining first information, where the first information is used to determine information sending modes of N2 neighbor cells in the N1 neighbor cells, the information sending mode includes a listen before talk LBT mode or a no-LBT mode, and N2 is a positive integer less than or equal to N1; and performing neighbor cell measurement on the N1 neighbor cells based on the first information.

## Description

### CROSS-REFERENCE TO RELATED APPLICATIONS

This application claims priority to Chinese Patent Application No. 202210444287. 1, filed with the China National Intellectual Property Administration on April 25, 2022 and entitled "NEIGHBOR CELL MEASUREMENT METHOD AND COMMUNICATION APPARATUS", which is incorporated herein by reference in its entirety.

### TECHNICAL FIELD

Embodiments of this application relate to the field of communication technologies, and in particular, to a neighbor cell measurement method and a communication apparatus.

### BACKGROUND

In a wireless communication system, a terminal device may discover a surrounding cell of the terminal device and communication quality corresponding to the cell through neighbor cell measurement. When the terminal device is in idle state, a result of the neighbor cell measurement may be used for cell reselection. When the terminal device is in connected state, the result of the neighbor cell measurement may be used for cell handover. The terminal device performs neighbor cell measurement mainly based on a synchronization signal block (synchronization signal block, synchronization signal block) sent by the neighbor cell.

Currently, some neighbor cells send SSBs based on a listen before talk (listen before talk, LBT) mechanism. If LBT fails, the SSBs cannot be sent. However, the terminal device cannot learn of whether a neighbor cell measured by the terminal device complies with the LBT mechanism. Accuracy of the neighbor cell measurement performed in this case is poor.

### SUMMARY

Embodiments of this application provide a neighbor cell measurement method and a communication apparatus, to improve accuracy of neighbor cell measurement.

According to a first aspect, an embodiment of this application provides a neighbor cell measurement method, including: determining N1 to-be-measured neighbor cells of a terminal device, where N1 is a positive integer; obtaining first information, where the first information is used to determine information sending modes of N2 neighbor cells in the N1 neighbor cells, the information sending mode includes a listen before talk LBT mode or a no-LBT mode, and N2 is a positive integer less than or equal to N1; and performing neighbor cell measurement on the N1 neighbor cells based on the first information.

The method provided in the foregoing design may be applied to the terminal device. After determining, based on an indication of an access network device, whether a neighbor cell complies with an LBT mechanism, the terminal device performs neighbor cell measurement in the LBT mode or the no-LBT mode. This can improve accuracy of the neighbor cell measurement.

In a possible design, the terminal device is in idle state or connected state. When the terminal device is in idle state, the method further includes: performing neighbor cell measurement on the N1 neighbor cells based on the first information, to obtain measurement results of the N1 neighbor cells, and determining a first target neighbor cell of the terminal device for reselection; obtaining a system message of the first target neighbor cell, where the system message includes second information, and the second information indicates an information sending manner used by the first target neighbor cell; and if the information sending manner used by the first target neighbor cell is different from an information sending manner determined before the neighbor cell measurement is performed, re-measuring the first target neighbor cell based on the second information, and determining, based on a result of the re-measurement, a second target neighbor cell of the terminal device for reselection.

In this design, after performing neighbor cell measurement based on the first information to determine the neighbor cell for reselection, the terminal device obtains an information sending mode actually used by the neighbor cell for reselection for verification, and updates the neighbor cell for reselection, to ensure that the terminal device finally reselects and camps on a proper neighbor cell. This improves communication performance.

The following describes content indicated by the first information.

### In a first possible design:

The first information indicates one or more of the following: an information sending mode of a cell operating on an unlicensed spectrum; an information sending mode of a cell operating in a specified frequency band on an unlicensed spectrum; an information sending mode of a cell operating on a specified frequency on an unlicensed spectrum; or an information sending mode of one or more cells, where the information sending mode indicated by the first information includes the information sending modes of the N2 neighbor cells.

When the information sending mode indicated by the first information includes information sending modes of all the to-be-measured neighbor cells of the terminal device, N2 is equal to N1.

When the information sending mode indicated by the first information includes an information sending mode of a part of the to-be-measured neighbor cells of the terminal device, and N2 is less than N1, any one of neighbor cells other than the N2 neighbor cells in the N1 neighbor cells is a second neighbor cell, where an information sending mode of the second neighbor cell is the LBT mode or the no-LBT mode by default; or an information sending mode of the second neighbor cell is determined based on quasi co-location QCL information corresponding to the second neighbor cell and/or an information sending mode of a serving cell of the terminal device, and the QCL information corresponding to the second neighbor cell indicates whether there is a QCL relationship between a plurality of reference signals sent by the second neighbor cell.

Optionally, if the first information indicates information sending modes of one cell in a plurality of frequency ranges, for example, includes an information sending mode on a frequency of the cell and an information sending mode of the cell, the terminal device may perform neighbor cell measurement on the cell according to a specified priority sequence and based on the information sending mode of the cell indicated by the first information. The priority sequence in descending order may be: a cell, a frequency, a frequency band, and an unlicensed spectrum. In this design, the terminal device may determine a unique information sending mode for a single cell, to avoid a case in which the terminal device cannot distinguish between information sending modes of neighbor cells. This can improve efficiency and accuracy of the neighbor cell measurement.

In the foregoing design, a network directly or explicitly indicates an information sending mode corresponding to at least one frequency range, which may cover information sending modes of all neighbor cells to be measured by the terminal device. Therefore, an application scope is wide, so that the terminal device separately performs neighbor cell measurement in the LBT mode and the no-LBT mode based on the indication. This can improve accuracy of the neighbor cell measurement and enhances reliability of measurement results.

### In a second possible design:

The first information indicates one or more of the following: quasi co-location QCL information corresponding to a cell operating on an unlicensed spectrum; QCL information corresponding to a cell operating in a specified frequency band on an unlicensed spectrum; QCL information corresponding to a cell operating on a specified frequency on an unlicensed spectrum; or QCL information corresponding to one or more cells, where the QCL information corresponding to the cell indicates whether there is a QCL relationship between a plurality of reference signals sent by the cell, and the QCL information indicated by the first information includes QCL information corresponding to the N2 neighbor cells.

Optionally, when a value of the QCL information corresponding to the cell is 32, the QCL information corresponding to the cell indicates that there is the QCL relationship between the plurality of reference signals sent by the cell; or when a value of the QCL information corresponding to the cell is 64, the QCL information corresponding to the cell indicates that there is no QCL relationship between the plurality of reference signals sent by the cell.

Optionally, if the first information indicates QCL information of one cell in a plurality of frequency ranges, for example, includes QCL information on a frequency of the cell and QCL information of the cell, the terminal device may perform neighbor cell measurement on the cell according to a specified priority sequence and based on the QCL information of the cell indicated by the first information. The priority sequence in descending order may be: a cell, a frequency, a frequency band, and an unlicensed spectrum. In this design, the terminal device may determine unique QCL information for a single cell, to avoid a case in which the terminal device cannot distinguish between QCL information of neighbor cells. This can improve efficiency and accuracy of the neighbor cell measurement.

Any neighbor cell in the N2 neighbor cells is described as a first neighbor cell. If there is the QCL relationship between a plurality of SSBs sent by the first neighbor cell, an information sending mode of the first neighbor cell is the LBT mode; if there is no QCL relationship between a plurality of reference signals sent by the first neighbor cell, an information sending mode of the first neighbor cell is the no-LBT mode by default; or if there is no QCL relationship between a plurality of reference signals sent by the first neighbor cell, an information sending mode of the first neighbor cell is determined based on an information sending mode of a serving cell of the terminal device.

When the QCL information indicated by the first information includes QCL information of all the to-be-measured neighbor cells of the terminal device, N2 is equal to N1.

When the QCL information indicated by the first information includes QCL information of a part of the to-be-measured neighbor cells of the terminal device, N2 is less than N1, and any one of neighbor cells other than the N2 neighbor cells in the N1 neighbor cells is a second neighbor cell, where an information sending mode of the second neighbor cell is the LBT mode or the no-LBT mode by default; or an information sending mode of the second neighbor cell is determined based on the information sending mode of the serving cell of the terminal device.

In the foregoing design, the terminal device determines, by using the QCL information indicated by the network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

### In a third possible design:

The first information indicates information sending modes of N3 serving cells of the terminal device, and N3 is a positive integer.

For example, if the information sending modes of the N3 serving cells are the same, N2 is equal to N1, and the information sending modes of the N2 neighbor cells are the information sending mode of the serving cell.

For example, if the information sending modes of the N3 serving cells are the same, operating frequencies of the N3 serving cells include operating frequencies of the N2 neighbor cells, and the information sending modes of the N2 neighbor cells are the information sending mode of the serving cell. When N2 is less than N1, an information sending mode of another neighbor cell other than the N2 neighbor cells in the N1 neighbor cells is the LBT mode or the no-LBT mode by default.

For example, if N3 is greater than 1, and information sending modes of at least two serving cells in the N3 serving cells are different, operating frequencies of the N3 serving cells include frequencies of the N2 neighbor cells, an information sending mode of an i^{th} neighbor cell in the N2 neighbor cells is an information sending mode of a serving cell that operates on a same frequency as the i^{th} neighbor cell in the N3 serving cells, and i is a positive integer ranging from 1 to N2. When N2 is less than N1, an information sending mode of another neighbor cell other than the N2 neighbor cells in the N1 neighbor cells is the LBT mode or the no-LBT mode by default.

For example, if N3 is greater than 1, the N3 serving cells include a primary cell and a primary secondary cell. The terminal device may determine, based on the N3 serving cells, the information sending modes of all the to-be-measured neighbor cells of the terminal device. In this case, N1 is equal to N2.

The operating frequencies of the N3 serving cells do not include operating frequencies of N4 neighbor cells in the N2 neighbor cells, information sending modes of the N4 neighbor cells are an information sending mode of the primary cell or an information sending mode of the primary secondary cell, and N4 is a positive integer less than or equal to N2.

The operating frequencies of the N3 serving cells include operating frequencies of N5 neighbor cells in the N2 neighbor cells, an information sending mode of a j^{th} neighbor cell in the N5 neighbor cells is an information sending mode of a serving cell that operates on a same frequency as the j^{th} neighbor cell in the N5 serving cells, j is a positive integer ranging from 1 to N5, and N5 is a positive integer less than or equal to N2.

In the foregoing design, the terminal device determines, by using the information sending mode of the serving cell that is indicated by the network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

According to a second aspect, an embodiment of this application provides a neighbor cell measurement method, which may be applied to an access network device. The method includes: determining first information, where the first information is used by a terminal device to determine information sending modes of N2 neighbor cells, the information sending mode includes a listen before talk LBT mode or a no-LBT mode, the N2 neighbor cells include a part or all of N1 to-be-measured neighbor cells of the terminal device, and N2 is a positive integer less than or equal to N1; and sending the first information.

The method provided in the foregoing design may be applied to the access network device. The access network device provides, for the terminal device, information that can be used to determine whether a neighbor cell complies with an LBT mechanism, so that the terminal device distinguishes between neighbor cell measurement in the LBT mode and neighbor cell measurement in the no-LBT mode. This can improve accuracy of the neighbor cell measurement.

The following describes content indicated by the first information.

### In a first possible design:

The first information indicates one or more of the following: an information sending mode of a cell operating on an unlicensed spectrum; an information sending mode of a cell operating in a specified frequency band on an unlicensed spectrum; an information sending mode of a cell operating on a specified frequency on an unlicensed spectrum; or an information sending mode of one or more cells, where the information sending mode indicated by the first information includes the information sending modes of the N2 neighbor cells.

When the information sending mode indicated by the first information includes information sending modes of all the to-be-measured neighbor cells of the terminal device, N2 is equal to N1.

When the information sending mode indicated by the first information includes an information sending mode of a part of the to-be-measured neighbor cells of the terminal device, and N2 is less than N1, any one of neighbor cells other than the N2 neighbor cells in the N1 neighbor cells is a second neighbor cell, where an information sending mode of the second neighbor cell is the LBT mode or the no-LBT mode by default; or an information sending mode of the second neighbor cell is determined based on quasi co-location QCL information corresponding to the second neighbor cell and/or an information sending mode of a serving cell of the terminal device, and the QCL information corresponding to the second neighbor cell indicates whether there is a QCL relationship between a plurality of reference signals sent by the second neighbor cell.

Optionally, if the first information indicates information sending modes of one cell in a plurality of frequency ranges, for example, includes an information sending mode on a frequency of the cell and an information sending mode of the cell, the terminal device may perform neighbor cell measurement on the cell according to a specified priority sequence and based on the information sending mode of the cell indicated by the first information. The priority sequence in descending order may be: a cell, a frequency, a frequency band, and an unlicensed spectrum. In this design, the terminal device may determine a unique information sending mode for a single cell, to avoid a case in which the terminal device cannot distinguish between information sending modes of neighbor cells. This can improve efficiency and accuracy of the neighbor cell measurement.

In the foregoing design, a network directly or explicitly indicates an information sending mode corresponding to at least one frequency range, which may cover information sending modes of all neighbor cells to be measured by the terminal device. Therefore, an application scope is wide, so that the terminal device separately performs neighbor cell measurement in the LBT mode and the no-LBT mode based on the indication. This can improve accuracy of the neighbor cell measurement and enhances reliability of measurement results.

### In a second possible design:

The first information indicates one or more of the following: quasi co-location QCL information corresponding to a cell operating on an unlicensed spectrum; QCL information corresponding to a cell operating in a specified frequency band on an unlicensed spectrum; QCL information corresponding to a cell operating on a specified frequency on an unlicensed spectrum; or QCL information corresponding to one or more cells, where the QCL information corresponding to the cell indicates whether there is a QCL relationship between a plurality of reference signals sent by the cell, and the QCL information indicated by the first information includes QCL information corresponding to the N2 neighbor cells.

Optionally, when a value of the QCL information corresponding to the cell is 32, the QCL information corresponding to the cell indicates that there is the QCL relationship between the plurality of reference signals sent by the cell; or when a value of the QCL information corresponding to the cell is 64, the QCL information corresponding to the cell indicates that there is no QCL relationship between the plurality of reference signals sent by the cell.

Optionally, if the first information indicates QCL information of one cell in a plurality of frequency ranges, for example, includes QCL information on a frequency of the cell and QCL information of the cell, the terminal device may perform neighbor cell measurement on the cell according to a specified priority sequence and based on the QCL information of the cell indicated by the first information. The priority sequence in descending order may be: a cell, a frequency, a frequency band, and an unlicensed spectrum. In this design, the terminal device may determine unique QCL information for a single cell, to avoid a case in which the terminal device cannot distinguish between QCL information of neighbor cells. This can improve efficiency and accuracy of the neighbor cell measurement.

Any neighbor cell in the N2 neighbor cells is described as a first neighbor cell. If there is the QCL relationship between a plurality of SSBs sent by the first neighbor cell, an information sending mode of the first neighbor cell is the LBT mode; if there is no QCL relationship between a plurality of reference signals sent by the first neighbor cell, an information sending mode of the first neighbor cell is the no-LBT mode by default; or if there is no QCL relationship between a plurality of reference signals sent by the first neighbor cell, an information sending mode of the first neighbor cell is determined based on an information sending mode of a serving cell of the terminal device.

When the QCL information indicated by the first information includes QCL information of all the to-be-measured neighbor cells of the terminal device, N2 is equal to N1.

When the QCL information indicated by the first information includes QCL information of a part of the to-be-measured neighbor cells of the terminal device, N2 is less than N1, and any one of neighbor cells other than the N2 neighbor cells in the N1 neighbor cells is a second neighbor cell, where an information sending mode of the second neighbor cell is the LBT mode or the no-LBT mode by default; or an information sending mode of the second neighbor cell is determined based on the information sending mode of the serving cell of the terminal device.

In the foregoing design, the terminal device determines, by using the QCL information indicated by the network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

### In a third possible design:

The first information indicates information sending modes of N3 serving cells of the terminal device, and N3 is a positive integer.

For example, if the information sending modes of the N3 serving cells are the same, N2 is equal to N1, and the information sending modes of the N2 neighbor cells are the information sending mode of the serving cell.

For example, if the information sending modes of the N3 serving cells are the same, operating frequencies of the N3 serving cells include operating frequencies of the N2 neighbor cells, and the information sending modes of the N2 neighbor cells are the information sending mode of the serving cell. When N2 is less than N1, an information sending mode of another neighbor cell other than the N2 neighbor cells in the N1 neighbor cells is the LBT mode or the no-LBT mode by default.

For example, if N3 is greater than 1, and information sending modes of at least two serving cells in the N3 serving cells are different, operating frequencies of the N3 serving cells include frequencies of the N2 neighbor cells, an information sending mode of an i^{th} neighbor cell in the N2 neighbor cells is an information sending mode of a serving cell that operates on a same frequency as the i^{th} neighbor cell in the N3 serving cells, and i is a positive integer ranging from 1 to N2. When N2 is less than N1, an information sending mode of another neighbor cell other than the N2 neighbor cells in the N1 neighbor cells is the LBT mode or the no-LBT mode by default.

For example, if N3 is greater than 1, the N3 serving cells include a primary cell and a primary secondary cell. The terminal device may determine, based on the N3 serving cells, the information sending modes of all the to-be-measured neighbor cells of the terminal device. In this case, N1 is equal to N2.

The operating frequencies of the N3 serving cells do not include operating frequencies of N4 neighbor cells in the N2 neighbor cells, information sending modes of the N4 neighbor cells are an information sending mode of the primary cell or an information sending mode of the primary secondary cell, and N4 is a positive integer less than or equal to N2.

The operating frequencies of the N3 serving cells include operating frequencies of N5 neighbor cells in the N2 neighbor cells, an information sending mode of a j^{th} neighbor cell in the N5 neighbor cells is an information sending mode of a serving cell that operates on a same frequency as the j^{th} neighbor cell in the N5 serving cells, j is a positive integer ranging from 1 to N5, and N5 is a positive integer less than or equal to N2.

In the foregoing design, the terminal device determines, by using the information sending mode of the serving cell that is indicated by the network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

According to a third aspect, an embodiment of this application provides a communication apparatus. The communication apparatus may be a terminal device, may be an apparatus, a module, a chip, or the like in the terminal device, or may be an apparatus that can be used together with the terminal device. In a design, the communication apparatus may include modules that are in one-to-one correspondence with the methods/operations/steps/actions described in the first aspect. The module may be implemented by a hardware circuit, software, or a combination of the hardware circuit and the software. In a design, the communication apparatus may include a processing module and a communication module. An example is as follows:

The processing module is configured to determine N1 to-be-measured neighbor cells of a terminal device, where N1 is a positive integer.

The communication module is configured to obtain first information, where the first information is used to determine information sending modes of N2 neighbor cells in the N1 neighbor cells, the information sending mode includes a listen before talk LBT mode or a no-LBT mode, and N2 is a positive integer less than or equal to N1.

The processing module is further configured to perform neighbor cell measurement on the N1 neighbor cells based on the first information.

In a possible design, the terminal device is in idle state or connected state. When the terminal device is in idle state, the method further includes: performing neighbor cell measurement on the N1 neighbor cells based on the first information, to obtain measurement results of the N1 neighbor cells, and determining a first target neighbor cell of the terminal device for reselection; obtaining a system message of the first target neighbor cell, where the system message includes second information, and the second information indicates an information sending manner used by the first target neighbor cell; and if the information sending manner used by the first target neighbor cell is different from an information sending manner determined before the neighbor cell measurement is performed, re-measuring the first target neighbor cell based on the second information, and determining, based on a result of the re-measurement, a second target neighbor cell of the terminal device for reselection.

For content indicated by the first information, refer to the descriptions in the first aspect for understanding.

According to a fourth aspect, an embodiment of this application provides a communication apparatus. The communication apparatus may be an access network device, may be an apparatus, a module, a chip, or the like in the access network device, or may be an apparatus that can be used together with the access network device. In a design, the communication apparatus may include modules that are in one-to-one correspondence with the methods/operations/steps/actions described in the second aspect. The module may be implemented by a hardware circuit, software, or a combination of the hardware circuit and the software. In a design, the communication apparatus may include a processing module and a communication module. An example is as follows:

The processing module is configured to determine first information, where the first information is used by a terminal device to determine information sending modes of N2 neighbor cells, the information sending mode includes a listen before talk LBT mode or a no-LBT mode, the N2 neighbor cells include a part or all of N1 to-be-measured neighbor cells of the terminal device, and N2 is a positive integer less than or equal to N1.

The communication module is configured to send the first information.

For content indicated by the first information, refer to the descriptions in the second aspect for understanding.

According to a fifth aspect, an embodiment of this application provides a communication apparatus. The communication apparatus includes a processor, configured to implement the method described in the first aspect. The processor is coupled to a memory. The memory is configured to store instructions and data. When the processor executes the instructions stored in the memory, the method described in the first aspect can be implemented. Optionally, the communication apparatus may further include a memory. The communication apparatus may further include a communication interface. The communication interface is used by the communication apparatus to communicate with another device. For example, the communication interface may be a transceiver, a circuit, a bus, a module, a pin, or a communication interface of another type.

In a possible device, the communication apparatus includes:
a memory, configured to store program instructions; and
a processor, configured to: determine N1 to-be-measured neighbor cells of a terminal device, where N1 is a positive integer; obtain first information through the communication interface, where the first information is used to determine information sending modes of N2 neighbor cells in the N1 neighbor cells, the information sending mode includes a listen before talk LBT mode or a no-LBT mode, and N2 is a positive integer less than or equal to N1; and perform neighbor cell measurement on the N1 neighbor cells based on the first information, to obtain measurement results of the N1 neighbor cells.

According to a sixth aspect, an embodiment of this application provides a communication apparatus. The communication apparatus includes a processor, configured to implement the method described in the second aspect. The processor is coupled to a memory. The memory is configured to store instructions and data. When the processor executes the instructions stored in the memory, the method described in the second aspect can be implemented. Optionally, the communication apparatus may further include a memory. The communication apparatus may further include a communication interface. The communication interface is used by the communication apparatus to communicate with another device. For example, the communication interface may be a transceiver, a circuit, a bus, a module, a pin, or a communication interface of another type.

In a possible device, the communication apparatus includes:
a memory, configured to store program instructions; and
a processor, configured to: determine first information, where the first information is used by a terminal device to determine information sending modes of N2 neighbor cells, the information sending mode includes a listen before talk LBT mode or a no-LBT mode, the N2 neighbor cells include a part or all of N1 to-be-measured neighbor cells of the terminal device, and N2 is a positive integer less than or equal to N1; and send the first information through the communication interface.

According to a seventh aspect, an embodiment of this application provides a communication system, including the communication apparatus according to the third aspect or the fifth aspect, and the communication apparatus according to the fourth aspect or the sixth aspect.

According to an eighth aspect, an embodiment of this application further provides a computer program. When the computer program is run on a computer, the computer is enabled to perform the method according to the first aspect or the second aspect.

According to a ninth aspect, an embodiment of this application further provides a computer program product, including instructions. When the instructions are run on a computer, the computer is enabled to perform the method according to the first aspect or the second aspect.

According to a tenth aspect, an embodiment of this application further provides a computer-readable storage medium. The computer-readable storage medium stores a computer program or instructions. When the computer program or the instructions are run on a computer, the computer is enabled to perform the method according to the first aspect or the second aspect.

According to an eleventh aspect, an embodiment of this application further provides a chip. The chip is configured to read a computer program stored in a memory, to perform the method according to the first aspect or the second aspect.

According to a twelfth aspect, an embodiment of this application further provides a chip system. The chip system includes a processor, configured to support a computer apparatus in implementing the method according to the first aspect or the second aspect. In a possible design, the chip system further includes a memory, and the memory is configured to store a program and data that are necessary for the computer apparatus. The chip system may include a chip, or may include the chip and another discrete component.

### BRIEF DESCRIPTION OF DRAWINGS

FIG. 1 is a diagram of a structure of a communication system according to an embodiment of this application;
FIG. 2A is a diagram of underestimated SSB measurement according to an embodiment of this application;
FIG. 2B is a diagram of overestimated SSB measurement according to an embodiment of this application;
FIG. 3 is a schematic flowchart of a neighbor cell measurement method according to an embodiment of this application;
FIG. 4 is a diagram of SSB measurement in an LBT mode according to an embodiment of this application;
FIG. 5 is a schematic flowchart of a neighbor cell measurement method according to an embodiment of this application;
FIG. 6 is a schematic flowchart of a neighbor cell measurement method according to an embodiment of this application;
FIG. 7 is a schematic flowchart of a neighbor cell measurement method according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

At least one (item) in embodiments of this application indicates one (item) or more (items). A plurality of (items) indicates two (items) or more than two (items). The term "and/or" describes an association relationship for describing associated objects and represents that three relationships may exist. For example, A and/or B may represent the following three cases: Only A exists, both A and B exist, and only B exists. A character "/" usually indicates an "or" relationship between the associated objects. In addition, it should be understood that although terms such as "first" and "second" may be used in embodiments of this application to describe objects, these objects should not be limited by these terms. These terms are merely used to distinguish the objects from each other.

Terms "including", "having", and any other variant thereof mentioned in the following descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the word "example" or "for example" is used to represent giving an example, an illustration, or a description. Any method or design scheme described as an "example" or "for example" in embodiments of this application should not be explained as being more preferred or having more advantages than another method or design scheme. Exactly, use of the word "example", "for example", or the like is intended to present a related concept in a specific manner.

Technologies provided in embodiments of this application may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a converged system of a plurality of systems, or a future communication system, for example, a 6G communication system. The 5G communication system may also be referred to as a new radio (new radio, NR) system.

A network element in a communication system may send a signal to another network element or receive a signal from another network element. The signal may include information, signaling, data, or the like. Alternatively, the network element may be replaced with an entity, a network entity, a device, a communication device, a communication module, a node, a communication node, or the like. In embodiments of this application, the network element is used as an example for description. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may also send signals to each other. In other words, both a signal sending network element and a signal receiving network element may be terminal devices.

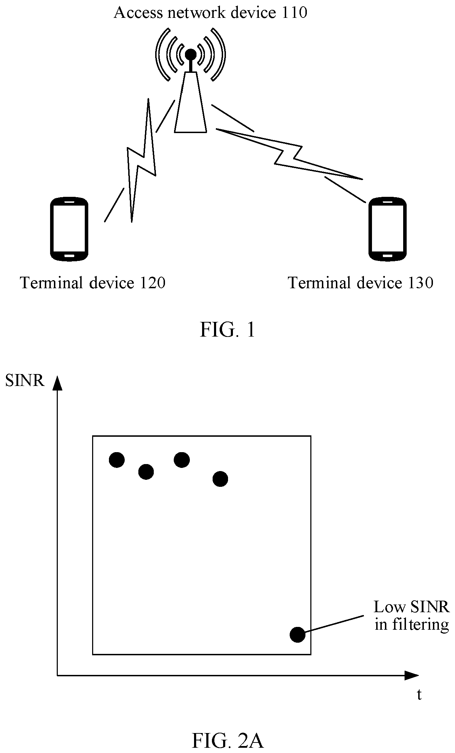

FIG. 1 shows a communication system. For example, the communication system includes an access network device 110 and two terminal devices: a terminal device 120 and a terminal device 130. At least one of the terminal device 120 and the terminal device 130 may send uplink data to the access network device 110, and the access network device 110 may receive the uplink data. The access network device may send downlink data to at least one of the terminal device 120 and the terminal device 130.

The following describes in detail the terminal devices and the access network device in FIG. 1.

### (1) Access network device

The access network device may be a base station (base station, BS). The access network device may also be referred to as a network device, an access node (access node, AN), or a radio access node (radio access node, RAN). The access network device may be connected to a core network (for example, an LTE core network or a 5G core network). The access network device may provide a radio access service for the terminal device, and communicate with the terminal device over an air interface by using one or more cells. The access network device includes, for example, but is not limited to, at least one of the following: a next-generation NodeB (generation nodeB, gNB) in 5G, an access network device or a module included in the access network device in an open radio access network (open radio access network, O-RAN), an evolved NodeB (evolved nodeB, eNB), a radio network controller (radio network controller, RNC), a NodeB (nodeB, NB), a base station controller (base station controller, BSC), a base transceiver station (base transceiver station, BTS), a home base station (for example, a home evolved nodeB or a home nodeB, HNB), a baseband unit (baseband unit, BBU), a transmission reception point (transmitting and receiving point, TRP), a transmission point (transmitting point, TP), a mobile switching center, and/or the like. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, a vehicle-mounted device, a wearable device, an access network device in a future evolved public land mobile network (public land mobile network, PLMN), or the like.

In embodiments of this application, a communication apparatus configured to implement a function of the access network device may be an access network device, may be a network device having a part of functions of the access network device, or may be an apparatus that can support the access network device in implementing the function, for example, a chip system, a hardware circuit, a software module, or a combination of the hardware circuit and the software module. The communication apparatus may be mounted in the access network device or used together with the access network device. In a method in embodiments of this application, an example in which the communication apparatus configured to implement the function of the access network device is an access network device is used for description.

### (2) Terminal device

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via the access network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. Some examples of the terminal device are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city), for example, a smart oil filler, a terminal device on a high-speed railway, a wireless terminal in smart home (smart home), for example, a smart speaker, a smart coffee machine, and a smart printer, and the like.

In embodiments of this application, a communication apparatus configured to implement a function of the terminal device may be a terminal device, may be a terminal device having a part of functions of the terminal, or may be an apparatus that can support the terminal device in implementing the function, for example, a chip system. The communication apparatus may be mounted in the terminal device or used together with the terminal device. In embodiments of this application, the chip system may include a chip, or may include the chip and another discrete component. In the technical solutions provided in embodiments of this application, an example in which the communication apparatus configured to implement the function of the terminal device is a terminal device or UE is used for description.

It should be understood that a quantity and types of devices in the communication system shown in FIG. 1 are merely an example, and embodiments of this application are not limited thereto. During actual application, the communication system may further include more terminal devices and more access network devices, and may further include another network element, for example, may include a core network device.

The method provided in embodiments of this application may be used for communication between an access network device and a terminal device, or may be used for communication between other communication devices, for example, communication between a macro base station and a micro base station on a wireless backhaul link, or communication between two terminal devices on a sidelink (sidelink, SL). This is not limited.

The following describes some terms used in embodiments of this application. It may be understood that the descriptions are not intended as a limitation on embodiments of this application.

### (1) Neighbor cell measurement

In a wireless communication system, a terminal device may discover a surrounding cell of the terminal device and communication quality corresponding to the cell through neighbor cell measurement. The communication quality may be understood as signal quality of a signal sent by the cell, or channel quality of a channel between the cell and the terminal device. Neighbor cell measurement includes one or more processes in cell detection, cell measurement, and cell evaluation. The terminal device performs neighbor cell measurement mainly by measuring an SSB sent by the neighbor cell. In each process of the neighbor cell measurement, the terminal device usually needs to measure a plurality of SSBs, to obtain a reliable measurement result.

The terminal device may perform neighbor cell measurement on one or more frequencies, to discover neighbor cells operating on the one or more frequencies and communication quality corresponding to the neighbor cells. In a scenario of SSB-based neighbor cell measurement, the foregoing frequency indicates a frequency on which the neighbor cell sends an SSB, and the frequency may also be described as an SSB frequency. The one or more frequencies may be preconfigured, or may be indicated to the terminal device by an access network device to which a serving cell of the terminal device belongs.

A frequency on which the terminal device performs neighbor cell measurement may be the same as or different from a frequency on which the serving cell of the terminal device sends an SSB. When the frequency on which the terminal device performs neighbor cell measurement is the same as the frequency on which the serving cell of the terminal device sends the SSB, and subcarrier spacings (subcarrier spacings, SCSs) are the same, the neighbor cell measurement may also be described as intra-frequency neighbor cell measurement, and neighbor cell measurement performed in another case may also be described as inter-frequency neighbor cell measurement. This description is applicable to a scenario in which the terminal device is in idle state or connected state. In addition, it may be understood that when the terminal device is in idle state, the serving cell may also be described as a cell on which the terminal device currently camps. The idle state may also be described as an IDLE state or a radio resource control (radio resource control, RRC) IDLE state. The connected state may also be described as a CONNECTED state or an RRC CONNECTED state.

A result of the neighbor cell measurement may be used for a plurality of purposes. For example, if the terminal device is in idle state, the terminal device discovers a surrounding cell and cell quality through neighbor cell measurement. When a neighbor cell meets a cell reselection condition, the terminal device may initiate cell reselection to camp on the neighbor cell. In a scenario in which the terminal device moves, the terminal device can camp on a proper cell in a timely manner based on cell reselection. For another example, if the terminal device is in connected state, the access network device to which the serving cell of the terminal device belongs may indicate a related configuration of neighbor cell measurement to the terminal device by using signaling. The terminal device may discover a surrounding cell through neighbor cell measurement, and report a measurement result of the neighbor cell measurement to the serving cell or to the access network device to which the serving cell belongs. If the access network device determines, based on the measurement result of the neighbor cell measurement, that there is a neighbor cell with good communication quality, the access network device may indicate the terminal device to perform cell handover, or add the neighbor cell with good communication quality as a serving cell of the terminal device, that is, add the neighbor cell to carrier aggregation (carrier aggregation, CA) for the terminal device, to increase a system throughput. It may be understood that there may be one or more serving cells of the terminal device.

### (2) Unlicensed spectrum

The unlicensed spectrum may also be referred to as an unlicensed frequency band, a grant-free spectrum, or a grant-free frequency band. Using an NR system as an example, used frequency bands mainly include a frequency range 1 (frequency range 1, FR1) frequency band and an FR2 frequency band. A frequency range of the FR1 frequency band is from 450 MHz to 6 GHz, and the FR1 frequency band is also referred to as a sub-6 GHz frequency band. A frequency range of the FR2 frequency band is from 24.25 GHz to 52.6 GHz. In addition, the FR2 frequency band may be further expanded to a higher frequency band, for example, from 52.6 GHz to 71 GHz. The FR2 frequency band or the higher frequency band may also be referred to as a millimeter wave (mmWave). The unlicensed spectrum includes the FR1 frequency band, the FR2 frequency band, and a part of the higher frequency band. In other words, the unlicensed spectrum may include a plurality of frequency bands.

On the unlicensed spectrum, the terminal device or the access network device may comply with a listen before talk LBT mechanism when sending a signal. To be specific, the terminal device or the access network device can send a signal only when determining, through LBT, that a channel is idle. Currently, it is specified by default in a 3GPP protocol that, on an unlicensed spectrum in the FRI frequency band, sending of a signal by the terminal device or the access network device needs to comply with LBT. However, for the frequency band from 52.6 GHz to 71 GHz, because the frequency band is high, a fine beam needs to be used to improve coverage. Therefore, a probability of an access collision is also low. Currently, on an unlicensed spectrum from 52.6 GHz to 71 GHz, there is no consistent restriction on whether sending of a signal by a device complies with the LBT mechanism. The device sending a signal may send the signal in an LBT mode or may send the signal not in the LBT mode. In the following descriptions, a mode in which a signal is sent not in the LBT mode is referred to as a no-LBT mode.

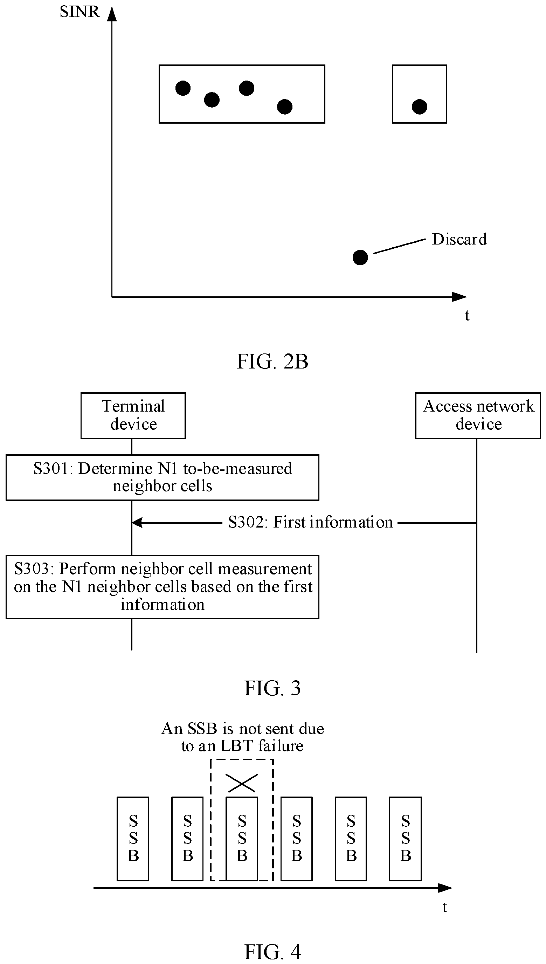

It can be learned from the foregoing content that, if a neighbor cell to be measured by the terminal device operates on an unlicensed spectrum with no restriction on compliance with LBT, the terminal device cannot learn of whether the neighbor cell sends an SSB in the LBT mode. The following two cases affecting a measurement result may occur. Case 1: The terminal device mistakenly considers that a neighbor cell sends an SSB in the no-LBT mode, but the neighbor cell actually sends the SSB in the LBT mode. The terminal device collects statistics on a result of measuring the SSB when the LBT fails, resulting in a measurement error. As shown in FIG. 2A, a signal to interference plus noise ratio (signal to interference noise ratio, SINR) is used to represent signal quality of an SSB. When the LBT fails, a measured SINR value is low, and an underestimated measurement result is obtained by filtering the SINR value and a plurality of other measured SINR values. Case 2: The terminal device mistakenly considers that a neighbor cell sends an SSB in the LBT mode, but the neighbor cell actually sends the SSB in the no-LBT mode. As shown in FIG. 2B, a signal to interference plus noise ratio (signal to interference noise ratio, SINR) is used to represent signal quality of the SSB. The terminal device considers that a measured SINR value is low due to an LBT failure. In this case, the low SINR is discarded and not used for filtering. As a result, an actual channel condition cannot be reflected, and an overestimated measurement result is obtained.

Based on this, embodiments of this application provide a neighbor cell measurement method and a communication apparatus. Signaling or a related definition is used, so that a terminal device determines whether a neighbor cell uses an LBT mode or a no-LBT mode, and performs neighbor cell measurement based on cases, to avoid information asymmetry such as Case 1 and Case 2. This can improve accuracy of the neighbor cell measurement.

Specifically, the access network device may send information by using the serving cell of the terminal device, to directly or indirectly indicate whether the LBT mode is used in a part or all of neighbor cells to be measured by the terminal device. FIG. 3 shows a neighbor cell measurement method. The method mainly includes the following procedure.

S301: A terminal device determines N1 to-be-measured neighbor cells, where N1 is a positive integer.

In an optional implementation, a frequency or a frequency band for performing neighbor cell measurement by the terminal device may be predefined. The terminal device performs neighbor cell measurement on the predefined frequency or frequency band. In other words, the N1 neighbor cells include a cell that operates around the terminal device on the predefined frequency or frequency band.

In another optional implementation, an access network device may indicate, to the terminal device, a frequency or a frequency band for performing neighbor cell measurement. The terminal device performs neighbor cell measurement based on the indicated frequency or frequency band. In other words, the N1 neighbor cells include a cell operating on the indicated frequency or frequency band. S302: The access network device sends first information to the terminal device.

The first information is used by the terminal device to determine information sending modes of N2 neighbor cells, the information sending mode includes a listen before talk LBT mode or a no-LBT mode, the N2 neighbor cells include a part or all of the N1 to-be-measured neighbor cells of the terminal device, and N2 is a positive integer less than or equal to N1.

Specifically, before the access network device sends the first information, the access network device may determine the first information based on neighbor cell information that can be obtained by the access network device, or the access network device may determine the first information by itself. The access network device may send the first information by using a serving cell of the terminal device. Correspondingly, the terminal device obtains the first information from the serving cell.

The first information may directly indicate the information sending modes of the N2 neighbor cells, or may be other information that can be used by the terminal device to determine the information sending mode. Design of the first information is described in detail in the following Solution 1 to Solution 3.

In addition, it should be noted that, when the N1 neighbor cells in S301 are indicated by the access network device to the terminal device, S301 and S302 are not subject to a specific sequence in this embodiment of this application. For example, the access network device may simultaneously perform S301 and S302, perform S301 before S302, or perform S302 before S301.

S303: Perform neighbor cell measurement on the N1 neighbor cells based on the first information.

Specifically, when N2 is equal to N1, the terminal device can determine, based on the first information, information sending modes of all the neighbor cells to be measured by the terminal device. When N2 is less than N1, the terminal device can determine, based on the first information, a part of the neighbor cells to be measured by the terminal device. For remaining N1-N2 neighbor cells to be measured, the terminal device may determine information sending modes of the (N1-N2) neighbor cells according to another rule or in another manner and with reference to a specific design of the first information. A method for determining, when N2 is less than N1, an information sending mode of a neighbor cell other than the N2 neighbor cells in the N1 neighbor cells is also described in detail in the following Solution 1 to Solution 3.

Further, for any neighbor cell in the N1 neighbor cells, a neighbor cell measurement manner in an LBT mode is different from a neighbor cell measurement manner in a no-LBT mode.

If it is determined that the information sending mode of the neighbor cell is the no-LBT mode, the terminal device may detect, at a related measurement location based on a receive window configured by an access network, for example, an SMTC receive window configured by the access network by using SSB measurement timing configuration (SSB measurement timing configuration, SMTC), SSBs that are periodically sent by the neighbor cell, and further measure a plurality of obtained SSBs and perform filtering, to finally obtain a result of the neighbor cell measurement. For example, when performing inter-frequency neighbor cell measurement, the terminal device needs to measure a specific quantity of SSBs in each of a cell detection process and a cell measurement process. Based on a definition in a 3rd generation partner project (the 3rd generation partner project, 3GPP) protocol, for example, 3GPP TS 38.133 V16.11.0, a quantity of SBBs measured by the terminal device in each process is at least Mpss/sss_sync_inter = 64. In other words, the terminal device needs sampling point values of at least 64 SSBs to perform cell detection and cell measurement, and filters the 64 sampling point values to obtain a result of the neighbor cell measurement. Optionally, the terminal device may receive the SSBs in a power saving mode. For example, the terminal device may receive, based on a discontinuous reception (discontinuous reception, DRX) cycle and via the SMTC receive window, the SSBs sent by the neighbor cell. Alternatively, the terminal device may receive the SSBs in a non-power saving mode. For example, the terminal device may continuously receive the SSBs based on a cycle of no DRX and via the SMTC window. For a manner of continuous reception or discontinuous reception of the SSBs by the terminal device based on the SMTC in the no-LBT mode, refer to content in the 3GPP TS 38.133 V16.11.0 protocol for understanding. For example, when the terminal device is in idle state, refer to Table 4.2.2.3-1, Table 4.2.2.3-2, Table 4.2.2.4-1, and the like for understanding. When the terminal device is in connected state, refer to Table 9.2.5.1-2, Table 9.3.4-2, Table 9.3.5-2, and the like for understanding. This is not limited in this embodiment of this application.

If it is determined that the information sending mode of the neighbor cell is the LBT mode, the terminal device needs to consider that an SSB cannot be detected and received at a related measurement location due to an LBT failure, that is, consider a case in which an SMTC receive window cannot be used or cannot be obtained. In this case, the terminal device may discard a sampling point value obtained when LBT fails, prolong measurement time to obtain an additional SSB, and further measure a plurality of received SSBs and perform filtering, to finally obtain a result of the neighbor cell measurement. For example, as shown in FIG. 4, it is assumed that the terminal device needs to measure five SSBs and perform filtering, to obtain a measurement result. If the terminal device finds that an SINR value of an SSB measured by the terminal device at an SSB detection location or in an SMTC receive window is low, it is considered that one SSB is not successfully sent due to an LBT failure of the access network device, and the terminal device needs to prolong the measurement time to obtain an additional SSB. In addition, optionally, an upper threshold of a quantity of SMTC receive windows that cannot be used or cannot be obtained may be defined, and is denoted as Lmeans. If the quantity of SMTC receive windows that cannot be used or cannot be obtained exceeds Lmeans, the UE needs to measure SSBs and perform filtering again. In addition, optionally, the terminal device may receive the SSBs in a power saving mode. For example, the terminal device may receive, based on a DRX cycle and via the SMTC receive window, the SSBs sent by the neighbor cell. Alternatively, the terminal device may receive the SSBs in a non-power saving mode. For example, the terminal device may continuously receive the SSBs based on a cycle of no DRX and via the SMTC window. For a manner of continuous reception or discontinuous reception of the SSBs by the terminal device based on the SMTC in the LBT mode, refer to content in the 3GPP TS 38.133 V16.11.0 protocol for understanding. For example, when the terminal device is in idle state, refer to Table 4.2A.2.3-1.4.2A.2.4-1 and the like for understanding. When the terminal device is in connected state, refer to Table 9.2A.5.1-2, Table 9.2A.6.1-1, Table 9.3A.5-1, and the like for understanding. This is not limited in this embodiment of this application.

In this embodiment of this application, after determining, based on the indication of the access network device, whether the neighbor cell complies with the LBT mechanism, the terminal device performs neighbor cell measurement in the LBT mode or the no-LBT mode. This can improve accuracy of the neighbor cell measurement.

The following further describes in detail, by using Solution 1 to Solution 3, the neighbor cell measurement method provided in this embodiment of this application.

### Solution 1

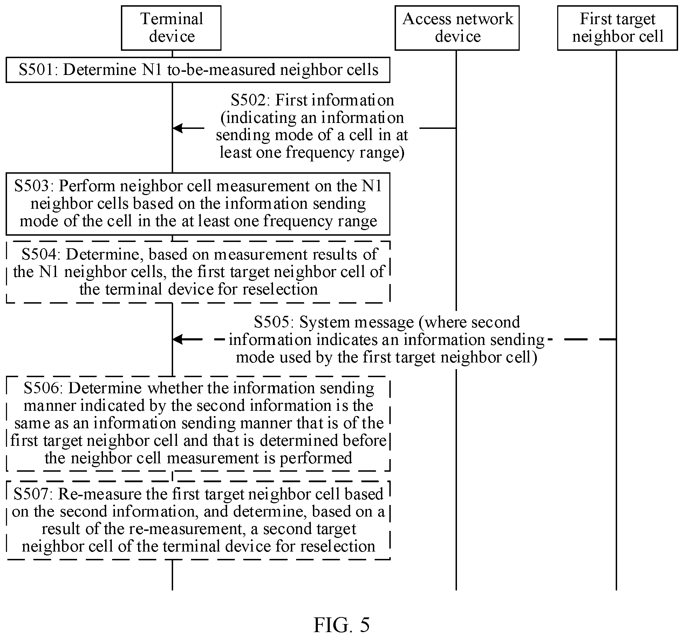

FIG. 5 shows a neighbor cell measurement method. The method mainly includes the following procedure.

S501: A terminal device determines N1 to-be-measured neighbor cells, where N1 is a positive integer.

For details, refer to the implementation described in S301. Details are not described again in this embodiment of this application.

S502: An access network device sends first information to the terminal device. The first information indicates an information sending mode of a cell in at least one frequency range. Specifically, the first information may indicate an information sending mode at one or more of an unlicensed spectrum level, a frequency band level, a frequency level, or a cell level. The unlicensed spectrum level correspondingly refers to an information sending mode of a cell operating on an unlicensed spectrum. In addition, it may be understood that the unlicensed spectrum level may also be referred to as a terminal device level, indicating that a smaller frequency range is not limited on the unlicensed spectrum. Optionally, the unlicensed spectrum may be specifically an unlicensed spectrum in a frequency band from 52.6 GHz to 71 GHz. The frequency band level correspondingly refers to an information sending mode of a cell operating in a specified frequency band on the unlicensed spectrum. There may be one or more specified frequency bands. The frequency level correspondingly refers to an information sending mode of a cell operating on a specified frequency on the unlicensed spectrum. There may be one or more specified frequencies. The cell level correspondingly refers to an information sending mode of one or more cells, for example, an information sending mode of a cell on at least one frequency on the unlicensed spectrum. In a scenario in which the terminal device performs neighbor cell measurement by measuring an SSB, it may be understood that the information sending mode of the cell described in this solution mainly refers to an information sending mode in which the cell sends the SSB.

Specifically, the access network device may determine, based on neighbor cell information (or referred to as a neighbor cell relationship) obtained before the first information is sent, content indicated by the first information. For example, the access network device finds, based on the obtained neighbor cell information, that information sending modes of all known neighbor cells on a frequency are an LBT mode. In this case, the access network device may determine to indicate, in the first information, that the information sending mode corresponding to the frequency is the LBT mode. For example, the access network device finds, based on the obtained neighbor cell information, that an information sending mode of a part of known neighbor cells on a frequency is an LBT mode, and an information sending mode of a part of the neighbor cells is a no-LBT mode. In this case, the access network device may configure, in the first information, an information sending mode corresponding to the cell level.

For a manner of obtaining the neighbor cell information by the access network device, refer to the following descriptions for understanding: The access network device may indicate the terminal device to measure and report an information sending mode of a historically measured neighbor cell, and the terminal device reports the information sending mode of the historically measured neighbor cell to the access network device.

Optionally, if the first information includes information sending modes at multiple levels, and frequency ranges corresponding to different levels overlap or include overlapping cells, an information sending mode corresponding to an overlapping part may be determined based on a level with a higher priority in a specified priority sequence. For example, the priority sequence in descending order may be: a cell level, a frequency level, a frequency band level, and an unlicensed spectrum level. Alternatively, the priority sequence in descending order may be: a cell, a frequency, a frequency band, and an unlicensed spectrum. If the first information indicates information sending modes at the frequency level and the frequency band level, when an overlapping frequency range exists between a specified frequency band and a specified frequency, and an information sending mode in the specified frequency band is different from that on the specified frequency, an information sending mode of the overlapping frequency range is consistent with the information sending mode at the frequency level to which the overlapping frequency range belongs, and an information sending mode of a cell operating in the overlapping frequency range is consistent with the information sending mode at the frequency level to which the overlapping frequency range belongs.

Specifically, when the terminal device is in idle state, the access network device may send the first information to the terminal device through a system message (SIB) 2, a SIB 3, or a SIB 4 of a serving cell. When the terminal device is in connected state, the access network device may send the first information to the terminal device through RRC signaling. The first information includes an identifier of the foregoing one or more levels and a value corresponding to an information sending mode at each level. For example, the value is represented as LBT or no-LBT. For another example, the value being 0 indicates LBT, and the value being 1 indicates no-LBT (no-LBT). For another example, the value being 1 indicates LBT, and the value being 0 indicates no-LBT (no-LBT).

The following provides examples of some message/signaling formats by using an example in which the value corresponding to the information sending mode at each level is represented as LBT or no-LBT.

Example 1: If the terminal device is in idle state, for a neighbor cell (referred to as an intra-frequency neighbor cell) that operates on an operating frequency same as that of the serving cell of the terminal device, the access network device may add, to the SIB 2, a field indicating the information sending mode at the frequency level, for example, denoted as intraFreqCellReselectionInfo. A format of the field may be represented as:

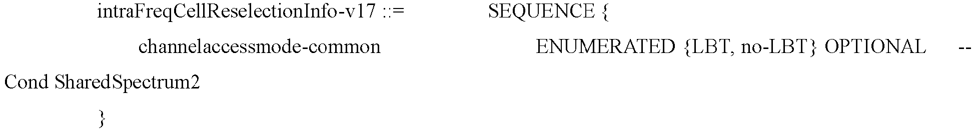

Example 2: If the terminal device is in idle state, for a neighbor cell (referred to as an intra-frequency neighbor cell) that operates on an operating frequency same as that of the serving cell of the terminal device, the access network device may add, to the SIB 3, a field indicating an information sending mode at the cell level. Specifically, the cell level may correspond to one or more cells, and the one or more cells form a cell list. The SIB 3 specifically includes an indication of an information sending mode of each cell in the cell list. For example, a field IntraFreqNeighCellList->>IntraFreqNeighCellInfo is added to indicate that the information sending mode of the cell in the cell list is defined as follows:

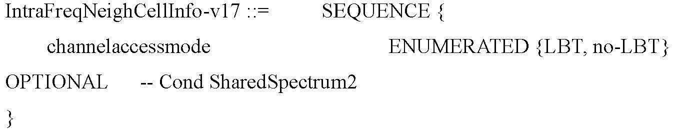

Example 3: If the terminal device is in idle state, for a neighbor cell (referred to as an inter-frequency neighbor cell) that operates on an operating frequency different from that of the serving cell of the terminal device, the access network device may add, to the SIB 4, a field indicating the information sending mode at the frequency level, for example, denoted as InterFreqCarrierFreqInfo. A format of the field may be represented as:

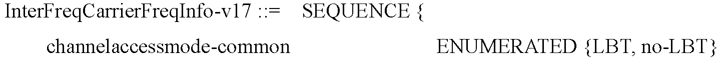

Example 4: If the terminal device is in idle state, for a neighbor cell (referred to as an inter-frequency neighbor cell) that operates on an operating frequency different from that of the serving cell of the terminal device, the access network device may add, to the SIB 4, a field indicating an information sending mode at the cell level. The cell level may correspond to one or more cells, and the one or more cells form a cell list. The SIB 4 specifically includes an indication of an information sending mode of each cell in the cell list. For example, a field IntraFreqNeighCellList->>IntraFreqNeighCellInfo is added to indicate that the information sending mode of the cell in the cell list is defined as follows:

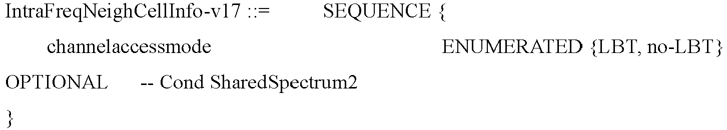

Example 5: If the terminal device is in connected state, the access network device may add, to SSB-ConfigMobility under a measurement object (MeasObject) in RRC measurement configuration (MeasConfig), a field indicating the information sending mode at the frequency level, for example, denoted as channelaccessmode-common. A format of the field may be represented as:

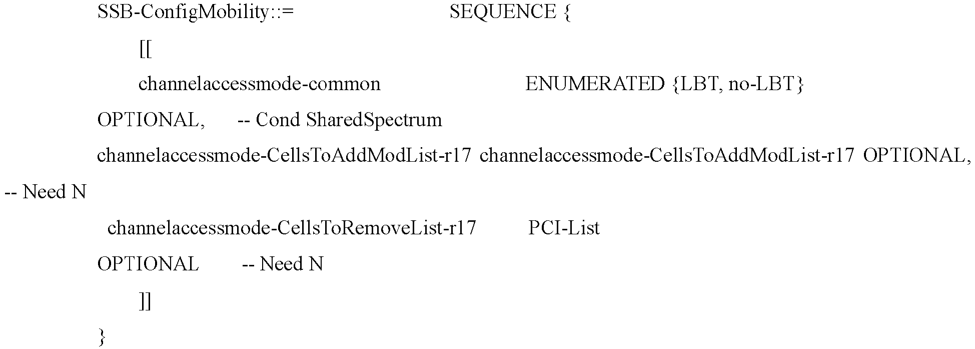

Example 6: If the terminal device is in connected state, the access network device may add, to a measurement object (MeasObject) in RRC measurement configuration (MeasConfig), a field indicating an information sending mode at the cell level. The cell level may correspond to one or more cells, and the one or more cells form a cell list. The measurement object specifically includes an indication of an information sending mode of each cell in the cell list, for example, denoted as channelaccessmode-CellsToAddMod-r17. A format of the field may be represented as:

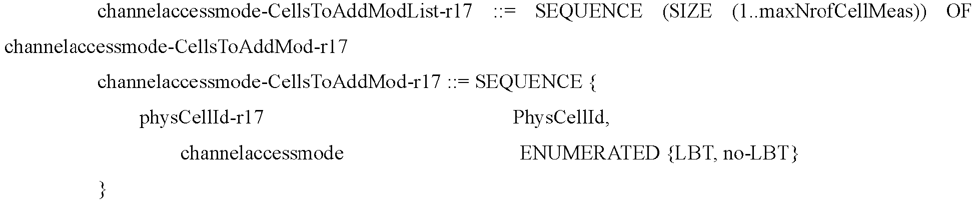

S503: The terminal device performs neighbor cell measurement on the N1 neighbor cells based on the information sending mode of the cell in the at least one frequency range.

Specifically, the terminal device may determine information sending modes of N2 neighbor cells based on the information sending mode corresponding to the at least one frequency range that is indicated by the first information in S502. The N2 neighbor cells include a part or all of the N1 neighbor cells.

When N2 is equal to N1, the terminal device may determine, based on the indication of the first information, the information sending modes of the N1 to-be-measured neighbor cells.

When N2 is less than N1, the terminal device may determine, based on the indication of the first information, the information sending modes of the N2 to-be-measured neighbor cells. The terminal device may determine information sending modes of remaining (N1-N2) neighbor cells in the following two optional implementations.

In an optional implementation, the terminal device may determine, in a default manner, that the information sending modes of the (N1-N2) neighbor cells are the LBT mode or the no-LBT mode by default. In addition, it may be understood that a default manner of the access network device should be consistent with that of the terminal device.

In another optional implementation, the first information indicates an information sending mode at the cell level, and the information sending mode at the cell level includes the information sending modes of the N2 neighbor cells. When the (N1-N2) neighbor cells include an intra-frequency neighbor cell of the cell indicated by the first information, the terminal device may determine that an information sending mode of the intra-frequency neighbor cell, in the (N2-N1) neighbor cells, of the cell indicated by the first information is the information sending mode of the cell indicated by the first information. An information sending mode of an inter-frequency neighbor cell, in the (N2-N1) neighbor cells, of the cell indicated by the first information may be determined in a default manner. It may be understood that, two intra-frequency cells described in this solution mean that the two cells operate on a same frequency. For example, one or more of SSB frequencies used by the two cells to send SSBs are the same. Similarly, two inter-frequency cells mean that the two cells operate on different frequencies. For example, SSB frequencies used by the two cells to send SSBs are different. In an example, it is assumed that one or more cells indicated by the first information include a cell 1 operating on a frequency 1, but do not include a to-be-measured cell 2 of the terminal device that operates on the frequency 1. The terminal device may determine that an information sending mode of the cell 2 is consistent with an information sending mode of the cell 1. If the information sending mode indicated by the first information does not include an information sending mode of a to-be-measured cell 3 of the terminal device, and an operating frequency of the cell in the first information is different from an operating frequency of the cell 3, the terminal device may determine the information sending mode of the cell 3 in a default manner.

Further, the terminal device may perform neighbor cell measurement based on the information sending mode of each of the N1 neighbor cells, to determine measurement results of the N1 neighbor cells. Specifically, for the neighbor cell measurement in the LBT mode and the neighbor cell measurement in the no-LBT mode, refer to S303 for implementation. Details are not described again in this embodiment of this application.

Further optionally, when the terminal device is in idle state, the measurement results of the N1 neighbor cells may be used to determine a neighbor cell on which the terminal device can reselect to camp. For example, after S501 to S503 are performed, step S504 or steps S504 to S507 may be further performed, to implement a solution of determining a neighbor cell of the terminal device for reselection. S504 to S507 are shown in FIG. 5 by using dashed lines.

S504: The terminal device determines, based on the measurement results of the N1 neighbor cells, a first target neighbor cell of the terminal device for reselection.

For example, the terminal device may determine communication quality of the N1 neighbor cells based on the measurement results of the N1 neighbor cells, and further select a neighbor cell with high communication quality from the N1 neighbor cells as the first target neighbor cell of the terminal device for reselection.

S505: The terminal device obtains a system message of the first target neighbor cell from the first target neighbor cell. The system message includes second information, and the second information indicates an information sending manner used by the first target neighbor cell.

Specifically, the system message of the first target neighbor cell may be a SIB 1 of the first target neighbor cell.

S506: For the first target neighbor cell, the terminal device determines whether the information sending manner indicated by the second information is the same as an information sending manner that is of the first target neighbor cell and that is determined before the neighbor cell measurement is performed. If the information sending manners are different, S507 is performed; or if the information sending manners are the same, no processing is performed, and the terminal device may still determine the first target neighbor cell as a neighbor cell of the terminal device for reselection.

S507: The terminal device re-measures the first target neighbor cell based on the second information, and determines, based on a result of the re-measurement, a second target neighbor cell of the terminal device for reselection.

Specifically, if the result of the re-measurement reflects that the communication quality or other performance of the first target neighbor cell still meets a requirement of the neighbor cell of the terminal device for reselection, the terminal device may still determine the first target neighbor cell as the neighbor cell of the terminal device for reselection. In this case, the second target neighbor cell is the first target neighbor cell. However, if the result of the re-measurement reflects that the communication quality or other performance of the first target neighbor cell cannot meet the requirement of the neighbor cell of the terminal device for reselection, or the communication quality of the first target neighbor cell is not the best in the N1 neighbor cells, the terminal device may continue to obtain a SIB 1 of a neighbor cell with high communication quality in the current N1 neighbor cells, and determine whether an information sending mode used by the neighbor cell with high communication quality is the same as that determined in S502. Similar to S506 and S507, related steps are performed based on a case in which the information sending modes are the same and a case in which the information sending modes are different. By analogy, a neighbor cell of the terminal device for reselection is determined.

In addition, optionally, when determining that the information sending manner indicated by the second information is different from the information sending manner that is of the first target neighbor cell and that is determined before the neighbor cell measurement is performed, the terminal device may alternatively perform neighbor cell measurement again on the N1 neighbor cells with reference to the information sending manner used by the first target neighbor cell, to update the measurement result described in S503; and further reselect, from the N1 neighbor cells based on an updated measurement result, a neighbor cell with high communication quality as the second target neighbor cell of the terminal device for reselection.

In this solution, a network directly or explicitly indicates the information sending mode corresponding to the at least one frequency range, which may cover information sending modes of all neighbor cells to be measured by the terminal device. Therefore, an application scope is wide, so that the terminal device separately performs neighbor cell measurement in the LBT mode and the no-LBT mode based on the indication. This can improve accuracy of the neighbor cell measurement and enhances reliability of measurement results.

### Solution 2

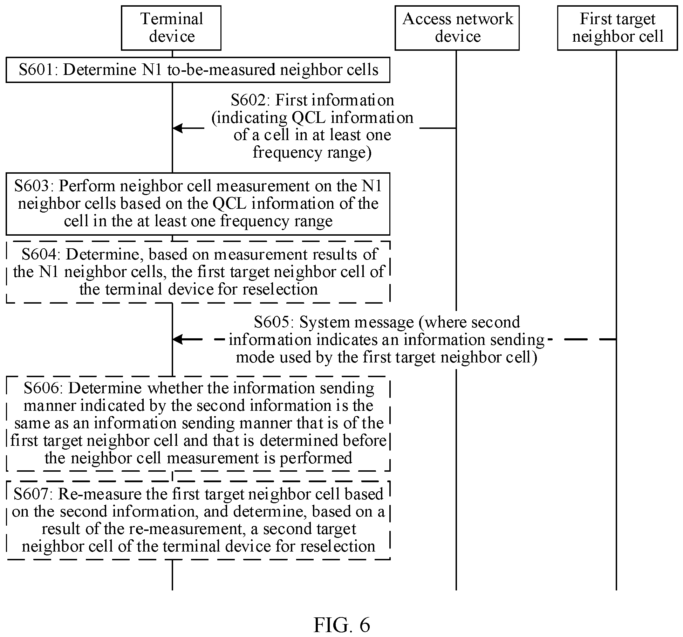

FIG. 6 shows a neighbor cell measurement method. The method mainly includes the following procedure.

S601: A terminal device determines N1 to-be-measured neighbor cells, where N1 is a positive integer.

For details, refer to the implementation described in S301. Details are not described again in this embodiment of this application.

S602: An access network device sends first information to the terminal device. The first information indicates quasi co-location (quasi co-location, QCL) information of a cell in at least one frequency range.

Specifically, the QCL information corresponding to the cell indicates whether there is a QCL relationship between a plurality of reference signals sent by the cell. A value of the QCL information is denoted as Q. When Q is a first value, it indicates that there is the QCL relationship between the plurality of reference signals sent by the cell. When Q is a second value, it indicates that there is no QCL relationship between the plurality of reference signals sent by the cell. In this embodiment of this application, the reference signal mainly refers to an SSB sent by the cell, and a specific value of Q depends on a quantity of SSBs sent by the cell within a specified period of time. For example, in one SSB burst (burst), the cell (which may alternatively be understood as an access network device of the cell) sends a plurality of SSBs, for example, 64 SSBs. Each SSB has a different identifier (index), and different identifiers correspond to different sending directions. In an LBT mode, some SSBs may not be sent due to an LBT failure. Therefore, it may be designed that there is a QCL relationship between SSBs at some locations in locations of the 64 SSBs sent in the SSB burst. For example, if it is configured that there is a QCL relationship between 64 SSBs, it indicates that the cell may send 32 SSBs at the locations of the 64 SSBs. When the first value is set to 32, there is a QCL relationship between an SSB sent at a location 1 and an SSB sent at a location 1+32=33. If the SSB at the location 1 is not successfully sent due to an LBT failure, the cell may continue to send, by using the location 1+32=33, an SSB that has the QCL relationship with the SSB at the location 1, and the terminal device may still receive the SSB at a second sending opportunity (namely, the location 33) of the SSB. For another example, if it is configured that there is no QCL relationship between 64 SSBs, it indicates that the cell may send 64 SSBs at locations of the 64 SSBs, the locations of the 64 SSBs are in one-to-one correspondence with the 64 SSBs, and a corresponding second value in this scenario is 64.

Specifically, the first information may indicate QCL information at one or more of an unlicensed spectrum level, a frequency band level, a frequency level, or a cell level. The unlicensed spectrum level correspondingly refers to QCL information of a cell operating on an unlicensed spectrum. In addition, it may be understood that the unlicensed spectrum level may also be referred to as a terminal device level, indicating that a smaller frequency range is not limited on the unlicensed spectrum. Optionally, the unlicensed spectrum may be specifically an unlicensed spectrum in a frequency band from 52.6 GHz to 71 GHz. The frequency band level correspondingly refers to QCL information of a cell operating in a specified frequency band on the unlicensed spectrum. There may be one or more specified frequency bands. The frequency level correspondingly refers to QCL information of a cell operating on a specified frequency on the unlicensed spectrum. There may be one or more specified frequencies. The cell level correspondingly refers to QCL information of one or more cells, for example, QCL information of a cell on at least one frequency on the unlicensed spectrum. In addition, it should be noted that the at least one frequency range related to the QCL information indicated by the first information in Solution 2 may be completely different from, partially overlapping with, or completely the same as the at least one frequency range related to the information sending mode indicated by the first information in Solution 1. This is not limited in this embodiment of this application.

Optionally, if the first information includes QCL information at multiple levels, and frequency ranges corresponding to different levels overlap or include overlapping cells, QCL information corresponding to an overlapping part may be determined based on a level with a higher priority in a specified priority sequence. For example, the priority sequence in descending order may be: a cell level, a frequency level, a frequency band level, and an unlicensed spectrum level. Alternatively, the priority sequence in descending order may be: a cell, a frequency, a frequency band, and an unlicensed spectrum. If the first information indicates QCL information at the frequency level and the frequency band level, when an overlapping frequency range exists between a specified frequency band and a specified frequency, and the QCL information in the specified frequency band is different from that on the specified frequency, QCL information of the overlapping frequency range is consistent with the QCL information at the frequency level to which the overlapping frequency range belongs, and QCL information of a cell operating in the overlapping frequency range is consistent with the QCL information at the frequency level to which the overlapping frequency range belongs. Optionally, when the terminal device is in idle state, the access network device may send the first information to the terminal device through a SIB 2, a SIB 3, or a SIB 4 of a serving cell. When the terminal device is in connected state, the access network device may send the first information to the terminal device through RRC signaling. The first information includes an identifier of the foregoing one or more levels, and indication information of a value Q corresponding to QCL information at each level. For example, the indication information is the value of Q, for example, 32 or 64. Alternatively, if the indication information is 0, it indicates that Q is a first value (32); or if the indication information is 1, it indicates that Q is a second value (64). Alternatively, if the indication information is 1, it indicates that Q is the first value (32); or if the indication information is 0, it indicates that Q is the second value (64), and so on.

S603: The terminal device performs neighbor cell measurement on the N1 neighbor cells based on the QCL information of the cell in the at least one frequency range.

Specifically, the QCL information of the cell in the at least one frequency range includes QCL information of N2 to-be-measured neighbor cells of the terminal device, and the N2 neighbor cells include a part or all of the N1 neighbor cells. The terminal device may determine, based on the QCL information of the N2 neighbor cells, information sending modes of the N2 to-be-measured neighbor cells of the terminal device. For example, any neighbor cell in the N2 neighbor cells is a first neighbor cell. If there is a QCL relationship between a plurality of SSBs sent by the first neighbor cell, an information sending mode of the first neighbor cell is the LBT mode; if there is no QCL relationship between a plurality of reference signals sent by the first neighbor cell, an information sending mode of the first neighbor cell is a no-LBT mode by default; or if there is no QCL relationship between a plurality of reference signals sent by the first neighbor cell, an information sending mode of the first neighbor cell may be determined based on an information sending mode of a serving cell of the terminal device.

If the terminal device can determine the information sending modes of all the to-be-measured neighbor cells based on the QCL information of the cell in the at least one frequency range, N2 is equal to N1. Further, the terminal device performs neighbor cell measurement based on the information sending mode of each of the N1 neighbor cells, to determine a measurement result of the neighbor cell. Specifically, for the neighbor cell measurement in the LBT mode and the neighbor cell measurement in the no-LBT mode, refer to S303 for implementation. Details are not described again in this embodiment of this application.

If the terminal device can determine an information sending mode of a part of the to-be-measured neighbor cells based on the QCL information of the cell in the at least one frequency range, N2 is less than N1. For remaining (N1-N2) neighbor cells, the terminal device may determine information sending modes of the remaining (N1-N2) neighbor cells in the following two optional implementations.

In an optional implementation, the terminal device may determine, in a default manner, that the information sending modes of the (N1-N2) neighbor cells are the LBT mode or the no-LBT mode by default. In addition, it may be understood that a default manner of the access network device should be consistent with that of the terminal device.

In another optional implementation, the first information indicates the QCL information at the cell level, and the QCL information at the cell level includes the QCL information of the N2 neighbor cells. When the (N1-N2) neighbor cells include an intra-frequency neighbor cell of the cell indicated by the first information, the terminal device may determine that an information sending mode of the intra-frequency neighbor cell, in the (N2-N1) neighbor cells, of the cell indicated by the first information is the determined information sending mode of the cell indicated by the first information. An information sending mode of an inter-frequency neighbor cell, in the (N2-N1) neighbor cells, of the cell indicated by the first information may be determined in a default manner. In an example, it is assumed that one or more cells correspondingly indicated by the first information include a cell 1 operating on a frequency 1, but do not include a to-be-measured cell 2 of the terminal device that operates on the frequency 1. The terminal device may determine that an information sending mode of the cell 2 is consistent with an information sending mode of the cell 1. If the QCL information indicated by the first information does not include QCL information of a to-be-measured cell 3 of the terminal device, and an operating frequency of the cell in the first information is different from an operating frequency of the cell 3, the terminal device may determine an information sending mode of the cell 3 in a default manner.

Further, the terminal device may perform neighbor cell measurement based on the information sending mode of each of the N1 neighbor cells, to determine measurement results of the N1 neighbor cells. Specifically, for the neighbor cell measurement in the LBT mode and the neighbor cell measurement in the no-LBT mode, refer to S303 for implementation. Details are not described again in this embodiment of this application.

Further optionally, when the terminal device is in idle state, the measurement results of the N1 neighbor cells may be used to determine a neighbor cell on which the terminal device can reselect to camp. For example, after S601 to S603 are performed, step S604 or steps S604 to S607 may be further performed, to implement a solution of determining a neighbor cell of the terminal device for reselection. S604 to S607 are shown in FIG. 6 by using dashed lines.

S604: The terminal device determines, based on the measurement results of the N1 neighbor cells, a first target neighbor cell of the terminal device for reselection.

For example, the terminal device may determine communication quality of the N1 neighbor cells based on the measurement results of the N1 neighbor cells, and further select a neighbor cell with high communication quality from the N1 neighbor cells as the first target neighbor cell of the terminal device for reselection.

S605: The terminal device obtains a system message of the first target neighbor cell from the first target neighbor cell. The system message includes second information, and the second information indicates an information sending manner used by the first target neighbor cell.

Specifically, the system message of the first target neighbor cell may be a SIB 1 of the first target neighbor cell.

S606: For the first target neighbor cell, the terminal device determines whether the information sending manner indicated by the second information is the same as an information sending manner that is of the first target neighbor cell and that is determined before the neighbor cell measurement is performed. If the information sending manners are different, S607 is performed; or if the information sending manners are the same, no processing is performed, and the terminal device may still determine the first target neighbor cell as a neighbor cell of the terminal device for reselection.

S607: The terminal device re-measures the first target neighbor cell based on the second information, and determines, based on a result of the re-measurement, a second target neighbor cell of the terminal device for reselection.

For details, refer to the implementation described in S507. Details are not described again in this embodiment of this application.

In this solution, the terminal device determines, by using the QCL information indicated by a network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

### Solution 3

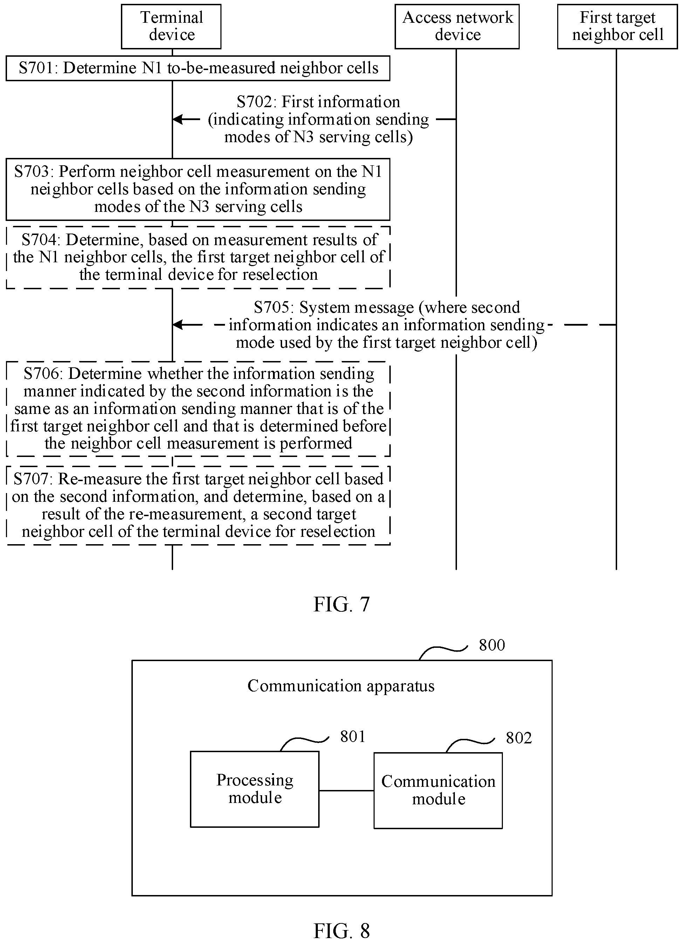

FIG. 7 shows a neighbor cell measurement method. The method mainly includes the following procedure.

S701: A terminal device determines N1 to-be-measured neighbor cells, where N1 is a positive integer.

For details, refer to the implementation described in S301. Details are not described again in this embodiment of this application.

S702: An access network device sends first information to the terminal device. The first information indicates information sending modes of N3 serving cells of the terminal device.

It may be understood that the access network device may send the first information to the terminal device by using the serving cell of the terminal device. In other words, the terminal device may obtain the first information from the serving cell of the terminal device. There may be one or more serving cells of the terminal device. In the following descriptions, N3 represents a quantity of serving cells. The terminal device may obtain the information sending modes of the N3 serving cells, where N3 is a positive integer.

Optionally, the N3 serving cells include a cell operating on an unlicensed spectrum.

Optionally, when the terminal device is in idle state, the access network device may send the first information to the terminal device through a SIB 1 of the serving cell. When the terminal device is in connected state, the access network device may send the first information to the terminal device through RRC signaling.

S703: The terminal device performs neighbor cell measurement on the N1 neighbor cells based on the information sending modes of the N3 serving cells.

Specifically, the terminal device may first determine information sending modes of the N1 neighbor cells with reference to the information sending modes of the serving cells. Then, the terminal device performs neighbor cell measurement on the N1 neighbor cells based on the information sending modes of the N1 neighbor cells, to obtain measurement results of the N1 neighbor cells. For neighbor cell measurement in an LBT mode and neighbor cell measurement in a no-LBT mode, refer to S303 for implementation. Details are not described again in this embodiment of this application.

Optionally, for determining, by the terminal device, the information sending modes of the N1 neighbor cells with reference to the information sending modes of the serving cells, refer to any one of the following implementations in Manner 1 to Manner 4.

Manner 1: If N3 is equal to 1, or the information sending modes of the N3 serving cells are the same when N3 is greater than 1, the terminal device may determine the information sending modes of all the to-be-measured neighbor cells (N1 neighbor cells) of the terminal device as the information sending modes of the serving cells. In this case, N2 is equal to N1.

Manner 2: If N3 is equal to 1, or the information sending modes of the N3 serving cells are the same when N3 is greater than 1, when operating frequencies of the N3 serving cells include operating frequencies of N2 neighbor cells in the N1 neighbor cells, the terminal device may determine that information sending modes of the N2 neighbor cells are the information sending modes of the serving cells. The N2 neighbor cells include a part or all of the N1 neighbor cells. When N2 is less than N1, the terminal device may determine, in a default manner, that information sending modes of remaining (N1-N2) neighbor cells are an LBT mode or a no-LBT mode.

Manner 3: If N3 is greater than 1, and information sending modes of at least two serving cells in the N3 serving cells are different, when operating frequencies of the N3 serving cells include operating frequencies of N2 neighbor cells in the N1 neighbor cells, the terminal device may determine that an information sending mode of an i^{th} neighbor cell in the N2 neighbor cells is an information sending mode of a serving cell that operates on a same frequency as the i^{th} neighbor cell in the N3 serving cells, where i is a positive integer ranging from 1 to N2. The N2 neighbor cells include a part or all of the N1 neighbor cells. Optionally, a manner of determining the information sending modes of the N2 neighbor cells may be described as an intra-frequency consistency principle. The intra-frequency consistency principle means that an information sending mode of a neighbor cell is consistent with an information sending mode of a serving cell that operates on a same frequency as the neighbor cell. When N2 is less than N1, the terminal device may determine, in a default manner, that information sending modes of remaining (N1-N2) neighbor cells are an LBT mode or a no-LBT mode.

Manner 4: If N3 is greater than 1, and the N3 serving cells include a primary cell (primary cell, PCell) and a primary secondary cell (primary secondary cell, PSCell),
for N4 to-be-measured neighbor cells of the terminal device, operating frequencies of the N3 serving cells do not include operating frequencies of the N4 neighbor cells. The terminal device may determine information sending modes of the N4 neighbor cells as an information sending mode of the primary cell or an information sending mode of the primary secondary cell. In this case, N4 is a positive integer less than or equal to N2, and N2 is equal to N1.

For N5 to-be-measured neighbor cells of the terminal device, the operating frequencies of the N3 serving cells include operating frequencies of the N5 neighbor cells. The terminal device may determine, based on the intra-frequency consistency principle, that an information sending mode of a j^{th} neighbor cell in the N5 neighbor cells is an information sending mode of a serving cell that operates on a same frequency as the j^{th} neighbor cell, where j is a positive integer ranging from 1 to N5. In this case, N5 is a positive integer less than or equal to N2, and N2 is equal to N1. Optionally, a value of N2 is a sum of values of N4 and N5.

It may be understood in Manner 2 to Manner 5 that, in a scenario in which the terminal device performs neighbor cell measurement by measuring an SSB, an operating frequency of a cell (for example, a serving cell or a neighbor cell) mainly refers to a frequency on which the cell sends the SSB, namely, an SSB frequency.

Further optionally, when the terminal device is in idle state, the measurement results of the N1 neighbor cells may be used to determine a neighbor cell on which the terminal device can reselect to camp. For example, after S701 to S703 are performed, step S704 or steps S704 to S707 may be further performed, to implement a solution of determining a neighbor cell of the terminal device for reselection. S704 to S707 are shown in FIG. 7 by using dashed lines.

S704: The terminal device determines, based on the measurement results of the N1 neighbor cells, a first target neighbor cell of the terminal device for reselection.

For example, the terminal device may determine communication quality of the N1 neighbor cells based on the measurement results of the N1 neighbor cells, and further select a neighbor cell with high communication quality from the N1 neighbor cells as the first target neighbor cell of the terminal device for reselection.

S705: The terminal device obtains a system message of the first target neighbor cell from the first target neighbor cell. The system message includes second information, and the second information indicates an information sending manner used by the first target neighbor cell.

Specifically, the system message of the first target neighbor cell may be a SIB 1 of the first target neighbor cell.

S706: For the first target neighbor cell, the terminal device determines whether the information sending manner indicated by the second information is the same as an information sending manner that is of the first target neighbor cell and that is determined before the neighbor cell measurement is performed. If the information sending manners are different, S707 is performed; or if the information sending manners are the same, no processing is performed, and the terminal device may still determine the first target neighbor cell as a neighbor cell of the terminal device for reselection.

S707: The terminal device re-measures the first target neighbor cell based on the second information, and determines, based on a result of the re-measurement, a second target neighbor cell of the terminal device for reselection.

For details, refer to the implementation described in S507. Details are not described again in this embodiment of this application.

In this solution, the terminal device determines, by using the information sending mode of the serving cell that is indicated by a network, an information sending mode of a neighbor cell to be measured by the terminal device, without additional signaling, to reduce signaling overheads. The terminal device separately performs neighbor cell measurement in the LBT mode and the no-LBT mode, so that accuracy of the neighbor cell measurement can be improved, and reliability of measurement results can be enhanced.

It should be understood that Solution 1 to Solution 3 provided in embodiments of this application may be implemented independently, or may be implemented together. The following provides some examples in which Solution 1, Solution 2, and Solution 3 are implemented together.

Example 1: Solution 1, solution 2, and solution 3 are implemented together. An access network device indicates, to a terminal device, an information sending mode of a cell in at least one frequency range, QCL information of the cell in the at least one frequency range, and information sending modes of N3 serving cells of the terminal device. The terminal device determines, based on the information sending mode of the cell in the at least one frequency range, information sending modes of N2 neighbor cells in N1 to-be-measured neighbor cells of the terminal device. The information sending mode of the cell in the at least one frequency range includes the information sending modes of the N2 neighbor cells. When N2 is less than N1, for (N1-N2) neighbor cells, the terminal device determines an information sending mode of a part of the (N1-N2) neighbor cells based on the QCL information of the cell in the at least one frequency range. The QCL information of the cell in the at least one frequency range includes QCL information of the part of the (N1-N2) neighbor cells. The terminal device determines an information sending mode of another part of the (N1-N2) neighbor cells based on the information sending modes of the N3 serving cells.

Specifically, it is assumed that the N1 to-be-measured neighbor cells of the terminal device include a cell 1, a cell 2, a cell 3, and a cell 4. The cell 1 and the cell 2 send SSBs on a frequency 1, the cell 3 sends an SSB on a frequency 2, and the cell 4 sends an SSB on a frequency 3. The information sending mode of the at least one frequency range that is indicated by the access network device includes an information sending mode corresponding to the frequency 1. The terminal device may determine, based on Solution 1, that the information sending modes of the N2 neighbor cells (including the cell 1 and the cell 2) are the information sending mode corresponding to the frequency 1 that is indicated by the access network device. The remaining (N1-N2) neighbor cells include the cell 3 and the cell 4. The access network device indicates that QCL information corresponding to the frequency 2 is a first value, and indicates that QCL information of the cell 3 included in QCL information at a cell level is a second value. The terminal device may determine, based on Solution 2, that the QCL information of the cell 3 is the second value (there is no QCL relationship), and may further determine an information sending mode of the cell 3 based on the N3 serving cells described in Solution 3. For the cell 4 on the frequency 3 that is not indicated in Solution 1 and Solution 2, the terminal device may determine an information sending mode of the cell 4 based on the information sending modes of the N3 serving cells described in Solution 3. In addition, if the N1 to-be-measured neighbor cells of the terminal device further include a cell 5, the terminal device can determine an information sending mode of the cell 5 as an LBT mode or a no-LBT mode in a default manner instead of based on the information sending mode, the QCL information, and the information sending modes of the N3 serving cells that are indicated by the access network device. Example 2: Solution 1 and Solution 2 are implemented together. An access network device indicates, to a terminal device, an information sending mode of a cell in at least one frequency range and QCL information of the cell in the at least one frequency range. The cell in the at least one frequency range includes a part of N1 to-be-measured neighbor cells of the terminal device, which are denoted as N2 neighbor cells, where N2 is less than N1. In this case, for (N1-N2) neighbor cells, the terminal device may determine information sending modes of the (N1-N2) neighbor cells with reference to the QCL information of the cell in the at least one frequency range that is indicated by the access network device.

Specifically, it is assumed that the N1 to-be-measured neighbor cells of the terminal device include a cell 1, a cell 2, and a cell 3. The cell 1 and the cell 2 send SSBs on a frequency 1, and the cell 3 sends an SSB on a frequency 2. The information sending mode of the at least one frequency range that is indicated by the access network device includes an information sending mode corresponding to the frequency 1. The terminal device may determine, based on Solution 1, that information sending modes of the N2 neighbor cells (including the cell 1 and the cell 2) are the information sending mode corresponding to the frequency 1 that is indicated by the access network device. The remaining (N1-N2) neighbor cells include the cell 3. The access network device indicates that QCL information corresponding to the frequency 2 is a first value, and indicates that QCL information of the cell 3 included in QCL information at a cell level is a second value. The terminal device may determine, based on Solution 2, that the QCL information of the cell 3 is the second value (there is no QCL relationship), and may further determine an information sending mode of the cell 3 as a no-LBT mode in a default manner. In addition, if the N1 to-be-measured neighbor cells of the terminal device further include a cell 6, the terminal device cannot determine an information sending mode of the cell 6 based on the information sending mode and the QCL information that are indicated by the access network device, and can determine the information sending mode of the cell 6 as an LBT mode or the no-LBT mode in a default manner.

Example 3: Solution 1 and Solution 3 are implemented together. An access network device indicates, to a terminal device, an information sending mode of a cell in at least one frequency range and information sending modes of N3 serving cells. The cell in the at least one frequency range includes a part of N1 to-be-measured neighbor cells of the terminal device, which are denoted as N2 neighbor cells, where N2 is less than N1. In this case, for (N1-N2) neighbor cells, the terminal device may determine information sending modes of the (N1-N2) neighbor cells with reference to the information sending modes of the N3 serving cells.

Specifically, it is assumed that the N1 to-be-measured neighbor cells of the terminal device include a cell 1, a cell 2, and a cell 4. The cell 1 and the cell 2 send SSBs on a frequency 1, and the cell 4 sends an SSB on a frequency 3. The information sending mode of the at least one frequency range that is indicated by the access network device includes an information sending mode corresponding to the frequency 1. The terminal device may determine, based on Solution 1, that information sending modes of the N2 neighbor cells (including the cell 1 and the cell 2) are the information sending mode corresponding to the frequency 1 that is indicated by the access network device. The remaining (N1-N2) neighbor cells include the cell 4. The terminal device may determine an information sending mode of the cell 4 based on the information sending modes of the N3 serving cells described in Solution 3. In addition, if the N1 to-be-measured neighbor cells of the terminal device further include a cell 7, the terminal device can determine an information sending mode of the cell 7 as an LBT mode or a no-LBT mode in a default manner instead of based on the information sending mode and the information sending modes of the N3 serving cells that are indicated by the access network device.

Example 4: Solution 2 and Solution 3 are implemented together. An access network device indicates, to a terminal device, QCL information of a cell in at least one frequency range and information sending modes of N3 serving cells. The cell in the at least one frequency range includes a part of N1 to-be-measured neighbor cells of the terminal device, which are denoted as N2 neighbor cells, where N2 is less than N1. In this case, the terminal device may determine information sending modes of the N2 neighbor cells based on QCL information of the N2 neighbor cells, and for (N1-N2) neighbor cells, may determine information sending modes of the (N1-N2) neighbor cells with reference to the information sending modes of the serving cells.

Specifically, it is assumed that the N1 to-be-measured neighbor cells of the terminal device include a cell 3 and a cell 4. The cell 3 sends an SSB on a frequency 2, and the cell 4 sends an SSB on a frequency 3. The access network device indicates that QCL information corresponding to the frequency 2 is a first value, and indicates that QCL information of the cell 3 included in QCL information at a cell level is a second value. The terminal device may determine, based on Solution 2, that the QCL information of the cell 3 is the second value (there is no QCL relationship). The terminal device may determine an information sending mode of the cell 3 based on the N3 serving cells described in Solution 3. For the (N1-N2) cells that are not indicated in Solution 2, namely, the cell 4, the terminal device may determine an information sending mode of the cell 4 based on the information sending modes of the N3 serving cells described in Solution 3. In addition, if the N1 to-be-measured neighbor cells of the terminal device further include a cell 8, the terminal device can determine an information sending mode of the cell 8 as an LBT mode or a no-LBT mode in a default manner instead of based on the QCL information and the information sending modes of the serving cells that are indicated by the access network device.

At least two solutions in Solution 1 to Solution 3 are used together to determine whether the to-be-measured neighbor cell complies with LBT, so that flexibility of neighbor cell measurement can be improved, an application scope is wider, and reliability is higher.

In addition, in an optional implementation, an information sending mode of a cell on an unlicensed spectrum in a frequency band from 52.6 GHz to 71 GHz may be predefined. For example, based on a definition, a cell on the unlicensed spectrum in the frequency band from 52.6 GHz to 71 GHz sends all SSBs in an LBT mode or a no-LBT mode. This predefinition may be implemented in a protocol.

Based on a same concept, refer to FIG. 8. An embodiment of this application provides a communication apparatus 800. The communication apparatus 800 includes a processing module 801 and a communication module 802. The communication apparatus 800 may be a terminal device, or may be a communication apparatus that is used in the terminal device or used together with the terminal device and that can implement a neighbor cell measurement method performed on a terminal device side. Alternatively, the communication apparatus 800 may be an access network device, or may be a communication apparatus that is used in the access network device or used together with the access network device and that can implement a neighbor cell measurement method performed on an access network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the access network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used in the terminal device, the processing module 801 may be configured to implement processing functions of the terminal device in the embodiments shown in FIG. 3 and FIG. 5 to FIG. 7, and the communication module 802 may be configured to implement receiving and sending functions of the terminal device in the embodiments shown in FIG. 3 and FIG. 5 to FIG. 7. Alternatively, the communication apparatus may be understood with reference to the third aspect and the possible designs in the third aspect in the summary.

When the communication apparatus 800 is used in the access network device, the processing module 801 may be configured to implement processing functions of the access network device in the embodiments shown in FIG. 3 and FIG. 5 to FIG. 7, and the communication module 802 may be configured to implement receiving and sending functions of the access network device in the embodiments shown in FIG. 3 and FIG. 5 to FIG. 7. Alternatively, the communication apparatus may be understood with reference to the fourth aspect and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the communication apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely logical function division, and may be other division during actual implementation. In addition, functional modules in each of embodiments of this application may be integrated into one processor, each of the modules may exist alone physically, or two or more modules may be integrated into one module. The integrated module may be implemented in a form of hardware, or may be implemented in a form of a software functional module.

Based on a same technical concept, an embodiment of this application further provides a communication apparatus 900. For example, the communication apparatus 900 may be a chip or a chip system. Optionally, in this embodiment of this application, the chip system may include a chip, or may include the chip and another discrete component.

The communication apparatus 900 may be configured to implement a function of any network element in the communication system described in the foregoing embodiments. The communication apparatus 900 may include at least one processor 910. The processor 910 is coupled to a memory. Optionally, the memory may be located inside the communication apparatus, the memory may be integrated with the processor, or the memory may be located outside the communication apparatus. For example, the communication apparatus 900 may further include at least one memory 920. The memory 920 stores a necessary computer program, a computer program, or instructions and/or data for implementing any one of the foregoing embodiments. The processor 910 may execute the computer program stored in the memory 920, to complete the method in any one of the foregoing embodiments.

The communication apparatus 900 may further include a communication interface 930, and the communication apparatus 900 may exchange information with another device through the communication interface 930. For example, the communication interface 930 may be a transceiver, a circuit, a bus, a module, a pin, or a communication interface of another type. When the communication apparatus 900 is a chip-type apparatus or circuit, the communication interface 930 in the communication apparatus 900 may also be an input/output circuit, and may input information (or referred to as receive information) and output information (or referred to as send information). The processor is an integrated processor, a microprocessor, an integrated circuit, or a logic circuit, and the processor may determine the output information based on the input information.

The coupling in this embodiment of this application may be an indirect coupling or a communication connection between apparatuses, units, or modules in an electrical form, a mechanical form, or another form, and is used for information exchange between the apparatuses, the units, or the modules. The processor 910 may operate in collaboration with the memory 920 and the communication interface 930. A specific connection medium between the processor 910, the memory 920, and the communication interface 930 is not limited in this embodiment of this application.

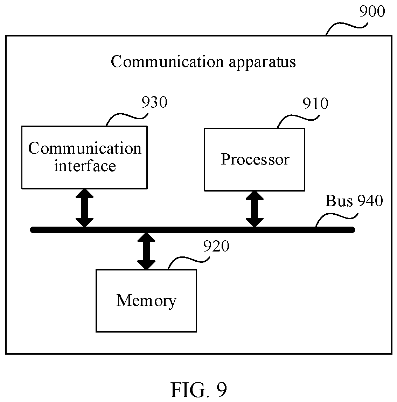

Optionally, refer to FIG. 9. The processor 910, the memory 920, and the communication interface 930 are connected to each other through a bus 940. The bus 940 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 9, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory may be a non-volatile memory such as a hard disk drive (hard disk drive, HDD) or a solid-state drive (solid-state drive, SSD), or may be a volatile memory (volatile memory) such as a random access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

In a possible implementation, the communication apparatus 900 may be used in an access network device. Specifically, the communication apparatus 900 may be the access network device, or may be an apparatus that can support the access network device in implementing a function of the access network device in any one of the foregoing embodiments. The memory 920 stores a computer program (or instructions) and/or data for implementing the function of the access network device in any one of the foregoing embodiments. The processor 910 may execute the computer program stored in the memory 920, to complete the method performed by the access network device in any one of the foregoing embodiments. When the communication apparatus 900 is used in the access network device, the communication interface in the communication apparatus 900 may be configured to interact with a terminal device, and send information to the terminal device or receive information from the terminal device.

In another possible implementation, the communication apparatus 900 may be used in a terminal device. Specifically, the communication apparatus 900 may be the terminal device, or may be an apparatus that can support the terminal device in implementing a function of the terminal device in any one of the foregoing embodiments. The memory 920 stores a computer program (or instructions) and/or data for implementing the function of the terminal device in any one of the foregoing embodiments. The processor 910 may execute the computer program stored in the memory 920, to complete the method performed by the terminal device in any one of the foregoing embodiments. When the communication apparatus 900 is used in the terminal device, the communication interface in the communication apparatus 900 may be configured to interact with an access network device, and send information to the access network device or receive information from the access network device.

The communication apparatus 900 provided in this embodiment may be used in the access network device to complete the method performed by the access network device, or may be used in the terminal device to complete the method performed by the terminal device. Therefore, for technical effect that can be achieved by the communication apparatus 900, refer to the foregoing method examples. Details are not described herein again.

Based on the foregoing embodiments, an embodiment of this application provides a communication system, including an access network device and a terminal device. The access network device and the terminal device may implement the neighbor cell measurement method provided in the embodiments shown in FIG. 3 and FIG. 5 to FIG. 7.

The technical solutions provided in embodiments of this application may be fully or partially implemented through software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a terminal device, an access network device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A neighbor cell measurement method, comprising:
determining N1 to-be-measured neighbor cells of a terminal device, wherein N1 is a positive integer;
obtaining first information, wherein the first information is used to determine information sending modes of N2 neighbor cells in the N1 neighbor cells, the information sending mode comprises a listen before talk LBT mode or a no-LBT mode, and N2 is a positive integer less than or equal to N1; and
performing neighbor cell measurement on the N1 neighbor cells based on the first information.

2. The method according to claim 1, wherein the terminal device is in idle state, and the method further comprises:
performing neighbor cell measurement on the N1 neighbor cells based on the first information, to obtain measurement results of the N1 neighbor cells, and determining a first target neighbor cell of the terminal device for reselection;
obtaining a system message of the first target neighbor cell, wherein the system message comprises second information, and the second information indicates an information sending manner used by the first target neighbor cell; and
if the information sending manner used by the first target neighbor cell is different from an information sending manner determined before the neighbor cell measurement is performed, re-measuring the first target neighbor cell based on the second information, and determining, based on a result of the re-measurement, a second target neighbor cell of the terminal device for reselection.

3. A neighbor cell measurement method, comprising:
determining first information, wherein the first information is used by a terminal device to determine information sending modes of N2 neighbor cells, the information sending mode comprises a listen before talk LBT mode or a no-LBT mode, the N2 neighbor cells comprise a part or all of N1 to-be-measured neighbor cells of the terminal device, N2 is a positive integer less than or equal to N1, and N1 is a positive integer; and
sending the first information.

4. The method according to any one of claims 1 to 3, wherein the first information indicates one or more of the following:
an information sending mode of a cell operating on an unlicensed spectrum;
an information sending mode of a cell operating in a specified frequency band on an unlicensed spectrum;
an information sending mode of a cell operating on a specified frequency on an unlicensed spectrum; or
an information sending mode of one or more cells, wherein
the information sending mode indicated by the first information comprises the information sending modes of the N2 neighbor cells.

5. The method according to claim 4, wherein N2 is less than N1, and any one of neighbor cells other than the N2 neighbor cells in the N1 neighbor cells is a second neighbor cell, wherein an information sending mode of the second neighbor cell is the LBT mode or the no-LBT mode by default; or an information sending mode of the second neighbor cell is determined based on quasi co-location QCL information corresponding to the second neighbor cell and/or an information sending mode of a serving cell of the terminal device, and the QCL information corresponding to the second neighbor cell indicates whether there is a QCL relationship between a plurality of reference signals sent by the second neighbor cell.

6. The method according to any one of claims 1 to 3, wherein the first information indicates one or more of the following:
quasi co-location QCL information corresponding to a cell operating on an unlicensed spectrum;
QCL information corresponding to a cell operating in a specified frequency band on an unlicensed spectrum;
QCL information corresponding to a cell operating on a specified frequency on an unlicensed spectrum; or
QCL information corresponding to one or more cells, wherein
the QCL information corresponding to the cell indicates whether there is a QCL relationship between a plurality of reference signals sent by the cell, and the QCL information indicated by the first information comprises QCL information corresponding to the N2 neighbor cells.

7. The method according to claim 6, wherein when a value of the QCL information corresponding to the cell is 32, the QCL information corresponding to the cell indicates that there is the QCL relationship between the plurality of reference signals sent by the cell; or when a value of the QCL information corresponding to the cell is 64, the QCL information corresponding to the cell indicates that there is no QCL relationship between the plurality of reference signals sent by the cell.

8. The method according to claim 6 or 7, wherein any neighbor cell in the N2 neighbor cells is a first neighbor cell; and if there is the QCL relationship between a plurality of SSBs sent by the first neighbor cell, an information sending mode of the first neighbor cell is the LBT mode; if there is no QCL relationship between a plurality of reference signals sent by the first neighbor cell, an information sending mode of the first neighbor cell is the no-LBT mode by default; or if there is no QCL relationship between a plurality of reference signals sent by the first neighbor cell, an information sending mode of the first neighbor cell is determined based on an information sending mode of a serving cell of the terminal device.

9. The method according to any one of claims 5 to 8, wherein N2 is less than N1, and any one of neighbor cells other than the N2 neighbor cells in the N1 neighbor cells is a second neighbor cell, wherein an information sending mode of the second neighbor cell is the LBT mode or the no-LBT mode by default; or an information sending mode of the second neighbor cell is determined based on the information sending mode of the serving cell of the terminal device.

10. The method according to any one of claims 1 to 3, wherein the first information indicates information sending modes of N3 serving cells of the terminal device, and N3 is a positive integer.

11. The method according to claim 10, wherein the information sending modes of the N3 serving cells are the same, N2 is equal to N1, and the information sending modes of the N2 neighbor cells are the information sending mode of the serving cell.

12. The method according to claim 10, wherein the information sending modes of the N3 serving cells are the same, operating frequencies of the N3 serving cells comprise operating frequencies of the N2 neighbor cells, and the information sending modes of the N2 neighbor cells are the information sending mode of the serving cell.

13. The method according to claim 10, wherein when N3 is greater than 1, and information sending modes of at least two serving cells in the N3 serving cells are different, operating frequencies of the N3 serving cells comprise frequencies of the N2 neighbor cells, an information sending mode of an i^{th} neighbor cell in the N2 neighbor cells is an information sending mode of a serving cell that operates on a same frequency as the i^{th} neighbor cell in the N3 serving cells, and i is a positive integer ranging from 1 to N2.

14. The method according to claim 12 or 13, wherein N2 is less than N1, and an information sending mode of another neighbor cell other than the N2 neighbor cells in the N1 neighbor cells is the LBT mode or the no-LBT mode by default.

15. The method according to claim 13, wherein N3 is greater than 1, the N3 serving cells comprise a primary cell and a primary secondary cell, and N1 is equal to N2.

16. The method according to claim 15, wherein the operating frequencies of the N3 serving cells do not comprise operating frequencies of N4 neighbor cells in the N2 neighbor cells, information sending modes of the N4 neighbor cells are an information sending mode of the primary cell or an information sending mode of the primary secondary cell, and N4 is a positive integer less than or equal to N2.

17. The method according to claim 15, wherein the operating frequencies of the N3 serving cells comprise operating frequencies of N5 neighbor cells in the N2 neighbor cells, an information sending mode of a j^{th} neighbor cell in the N5 neighbor cells is an information sending mode of a serving cell that operates on a same frequency as the j^{th} neighbor cell in the N5 serving cells, j is a positive integer ranging from 1 to N5, and N5 is a positive integer less than or equal to N2.

18. A communication apparatus, comprising:
a processing module, configured to determine N1 to-be-measured neighbor cells of a terminal device, wherein N1 is a positive integer; and
a communication module, configured to obtain first information, wherein the first information is used to determine information sending modes of N2 neighbor cells in the N1 neighbor cells, the information sending mode comprises a listen before talk LBT mode or a no-LBT mode, and N2 is a positive integer less than or equal to N1, wherein
the processing module is further configured to perform neighbor cell measurement on the N1 neighbor cells based on the first information.

19. A communication apparatus, comprising:
a processing module, configured to determine first information, wherein the first information is used by a terminal device to determine information sending modes of N2 neighbor cells, the information sending mode comprises a listen before talk LBT mode or a no-LBT mode, the N2 neighbor cells comprise a part or all of N1 to-be-measured neighbor cells of the terminal device, N2 is a positive integer less than or equal to N1, and N1 is a positive integer; and
a communication module, configured to send the first information.

20. A communication apparatus, comprising:
a processor, wherein the processor is coupled to a memory, the memory is configured to store a computer program or instructions, and the processor is configured to execute the computer program or instructions, to implement the method according to any one of claims 1, 2, and 4 to 17, or implement the method according to any one of claims 3 to 17.

21. A computer-readable storage medium, wherein the computer-readable storage medium stores a computer program or instructions, and when the instructions are run on a computer, the method according to any one of claims 1, 2, and 4 to 17 is implemented, or the method according to any one of claims 3 to 17 is implemented.

22. A computing program product, comprising computer-executable instructions, wherein when the computer-executable instructions are run on a computer, the computer is enabled to implement the method according to any one of claims 1, 2, and 4 to 17, or implement the method according to any one of claims 3 to 17.
